(19) Europäisches Patentamt
European Patent Office
Office européen des brevets

(11) **EP 2 603 333 B1**

(12) **EUROPÄISCHE PATENTSCHRIFT**

(45) Veröffentlichungstag und Bekanntmachung des Hinweises auf die Patenterteilung:
**14.01.2015 Patentblatt 2015/03**

(21) Anmeldenummer: **11770713.3**

(22) Anmeldetag: **05.09.2011**

(51) Int Cl.:
**B21B 37/16** *(2006.01)*      **B21B 37/28** *(2006.01)*
**G05B 13/02** *(2006.01)*

(86) Internationale Anmeldenummer:
**PCT/EP2011/065285**

(87) Internationale Veröffentlichungsnummer:
**WO 2012/034884 (22.03.2012 Gazette 2012/12)**

(54) **ECHTZEIT-ERMITTLUNGSVERFAHREN FÜR TEMPERATUR UND GEOMETRIE EINES METALL-WARMBANDES IN EINER FERTIGSTRASSE**

REAL-TIME DETERMINATION METHOD FOR TEMPERATURE AND GEOMETRY OF A HOT METAL STRIP IN A FINISHING TRAIN

PROCÉDÉ DE DÉTERMINATION EN TEMPS RÉEL DE LA TEMPÉRATURE ET DE LA GÉOMÉTRIE D'UN FEUILLARD MÉTALLIQUE LAMINÉ À CHAUD DANS UN TRAIN FINISSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.09.2010 EP 10177104**

(43) Veröffentlichungstag der Anmeldung:
**19.06.2013 Patentblatt 2013/25**

(73) Patentinhaber: **Siemens Aktiengesellschaft**
**80333 München (DE)**

(72) Erfinder:
• **KURZ, Matthias**
**91052 Erlangen (DE)**
• **WEINZIERL, Klaus**
**90480 Nürnberg (DE)**

(56) Entgegenhaltungen:
**DE-A1- 10 156 008     US-A1- 2007 151 635**

• **FRANCIS WAGNER ET AL: "Feed forward control system for a hot strip mill", IRON & STEEL TECHNOLOGY, AIST, WARRENDALE, PA, US, 1. Oktober 1984 (1984-10-01), Seiten 44-48, XP009148815, ISSN: 1547-0423 in der Anmeldung erwähnt**
• **MARTINETZ T ET AL: "NEURONALE NETZE ZUR STEUERUNG VON WALZSTRASSEN", AUTOMATISIERUNGSTECHNISCHE PRAXIS - ATP, OLDENBOURG INDUSTRIEVERLAG, MUNCHEN, DE, Bd. 38, Nr. 10, 1. Januar 1996 (1996-01-01), Seiten 28,30-32,34, XP000195849, ISSN: 0178-2320**

**Beschreibung**

Die vorliegende Erfindung betrifft ein Ermittlungsverfahren für Temperatur und Geometrie eines eine Fertigstraße mit mehreren Walzgerüsten durchlaufenden Metall-Warmbandes,

- wobei spätestens beim Einlaufen von Bandpunkten des Warmbandes in die Fertigstraße für den jeweils einlaufenden Bandpunkt eine Anfangstemperatur erfasst wird,
- wobei die Anfangstemperatur des jeweiligen Bandpunktes dem jeweiligen Bandpunkt als Isttemperatur zugeordnet wird,
- wobei die Bandpunkte beim Durchlaufen der Fertigstraße wegverfolgt werden,
- wobei das Warmband in der Fertigstraße Temperaturbeeinflussungen und Geometriebeeinflussungen unterworfen wird,
- wobei mittels des Modells anhand der Isttemperaturen und der Temperaturbeeinflussungen unter Berücksichtigung der Wegverfolgung in Echtzeit neue Isttemperaturen der erfassten Bandpunkte ermittelt und den erfassten Bandpunkten zugeordnet werden, so dass die Isttemperaturen der in die Fertigstraße eingelaufenen Bandpunkte während des Durchlaufs der Bandpunkte durch die Fertigstraße jederzeit zur Verfügung stehen.

Die vorliegende Erfindung betrifft weiterhin ein Computerprogramm, das Maschinencode umfasst, der von einem Rechner unmittelbar abarbeitbar ist und dessen Abarbeitung durch den Rechner bewirkt, dass der Rechner ein derartiges Ermittlungsverfahren ausführt.

Die vorliegende Erfindung betrifft weiterhin einen Rechner, der derart ausgebildet ist, dass er ein derartiges Ermittlungsverfahren ausführt.

Weiterhin betrifft die vorliegende Erfindung eine Fertigstraße mit mehreren Walzgerüsten zum Walzen von Metall-Warmband, die mit einem derartigen Rechner ausgestattet ist.

Die oben genannten Gegenstände sind beispielsweise aus der DE 101 56 008 A und der korrespondierenden US 7,197,802 B2 bekannt.

Aus dem Fachaufsatz "Feed forward control system for a hot strip mill" von Francis Wagner et al., veröffentlicht in Iron and Steel Engineer, Oktober 1984, Seiten 44 bis 48, ist ein Ermittlungsverfahren für Temperatur und Geometrie eines eine Fertigstraße mit mehreren Walzgerüsten durchlaufenden Metall-Warmbandes bekannt,

- wobei hinter dem ersten Walzgerüst der Fertigstraße eine Anfangstemperatur von bereits in die Fertigstraße eingelaufenen Bandpunkten erfasst wird,
- wobei die Anfangstemperatur dem jeweiligen Bandpunkt als Isttemperatur zugeordnet wird,
- wobei dem jeweiligen Bandpunkt weiterhin eine Anfangsgeometrie zugeordnet ist,
- wobei die Bandpunkte beim Durchlaufen der Fertigstraße wegverfolgt werden,
- wobei das Warmband in der Fertigstraße Temperaturbeeinflussungen und Geometriebeeinflussungen unterworfen wird,
- wobei mittels eines Modells anhand der Isttemperaturen, der Istgeometrie, der Temperaturbeeinflussungen und der Geometriebeeinflussungen unter Berücksichtigung der Wegverfolgung in Echtzeit neue Isttemperaturen und neue Istgeometrien der erfassten Bandpunkte ermittelt und den erfassten Bandpunkten zugeordnet werden, so dass die Isttemperaturen und die Istgeometrien der in die Fertigstraße eingelaufenen Bandpunkte während des Durchlaufs der Bandpunkte durch die Fertigstraße jederzeit zur Verfügung stehen,
- wobei nach dem Auslaufen der Bandpunkte aus der Fertigstraße deren Endgeometrien erfasst werden.

In der Fertigstraße einer Warmbandstraße wird vorwiegend die Bandgeometrie, d. h. insbesondere die Dicke und die Planheit, eingestellt. Die Fertigstraße besteht dazu aus mindestens einem Gerüst, in der Regel aus mehreren Gerüsten. Typisch sind Fertigstraßen mit 6 oder 7 Walzgerüsten. Üblicherweise ist die Fertigstraße mit zwei Automatisierungsteilen versehen:

In der Basisautomatisierung befindet sich die technologische Regelung, die in Echtzeit arbeitet und zumeist mit Abtastraten im Bereich von wenigen Millisekunden die Bearbeitung sehr schneller Regelvorgänge erlaubt. Aufgrund der geringen Rechenleistung und der kleinen Abtastzeit sind dort verwendete Modelle gegenüber der Realität in der Regel so vereinfacht, dass nur lokale Aussagen möglich sind.

In der überlagerten Prozessautomatisierung wird der Setup für den Bandkopf gerechnet. Weiterhin wird dort die Band-zu-Band-Adaption ausgeführt. Die dort programmierten Modelle sind nichtlinear und ermöglichen Aussagen über das globale Verhalten des Warmbandes und der Fertigstraße. Sie sind in der Regel um ein vielfaches aufwändiger als die Modelle der Basisautomatisierung. Üblich ist auch, der Prozessautomatisierung Sensitivitäten zu entnehmen, die zur Aufstellung lokaler Modelle in der Basisautomatisierung verwendet werden können. Im Stand der Technik ist es nicht üblich, die Modelle der Prozessautomatisierung in Echtzeit auszuführen. Es wird lediglich ein Setup für den Bandkopf berechnet, bevor der Bandkopf in die Fertigstraße einläuft.

Die genannte Aufgabentrennung erlaubt es im Stand der Technik nicht, komplexe Regelungen in Echtzeit unter Berücksichtigung des gesamten Anlagenzustandes der Fertigstraße auszuführen. Beispielsweise ist es nicht möglich, die Banddicke mittels Verstellung aller Walzgerüste mit einem intelligenten Regelalgorithmus zu variieren, der den Zustand der Fertigstraße insgesamt berücksichtigt. Das Problem ist, dass der Transport eines Materialabschnittes durch die Fertigstraße typischerweise 20s dauert, bei der Verwendung des gesamten Anlagenzustandes in der Basisautomatisierung mit dem dort üblichen sehr kleinen Zeittakt aber die Komplexität der Regelung so groß wird, dass sie nicht mehr in Echtzeit bearbeitet werden kann. Möchte man aber beispielsweise die Anstellungen aller Walzgerüste mit einem modellprädiktiven Regler steuern, muss man den gesamten Zustand der Fertigstraße und alle Verkopplungen der Walzgerüste miteinander über die Züge beachten, in jedem Zeittakt eine Prognose erstellen und dabei den Prädiktionshorizont wenigstens etwa so groß wählen wie die Durchlaufzeit des Materials durch die Fertigstraße ist.

Im Stand der Technik ist die Basisautomatisierung für die Regelung zuständig. Der Prozessrechner, der die Prozessautomatisierung realisiert, ist für den Setup am Bandkopf und die Adaption zuständig. Im Prozessrechner wird üblicherweise mit Bandsegmenten gearbeitet. Das sind Softwarerepräsentationen von Abschnitten des gewalzten Materials vorgegebener Länge.

Der Setup für den Bandkopf ist, wie bereits erwähnt, die Vorausberechnung des Prozessrechners. Der Prozessrechner hat dabei die Aufgabe, den so genannten Stichplan zu berechnen, mit dem der Bandkopf durch die Fertigstraße gefahren werden soll. Ziel der Stichplanberechnung ist die Ermittlung der Abnahmen und der dabei auftretenden Walzkräfte. Die Stichplanberechnung läuft üblicherweise iterativ ab. In einem ersten Schritt werden zunächst gültige Adaptionskoeffizienten für das vor der Fertigstraße liegende Band ermittelt. Dabei können im Sinne einer Kurzzeitvererbung die Adaptionskoeffizienten, die mit Durchlauf des vorausgehenden Bandes ermittelt wurden, verwendet werden. Dies geschieht normalerweise, wenn das vorausgehende Band aus einem ähnlichen Material besteht wie das neu zu walzende Band. Ist das nicht der Fall, werden die benötigten Korrekturfaktoren aus einem Langzeitarchiv entnommen (typisch neuronales Netz, alternativ Tabellen usw.). Anschließend werden gemäß Sollvorgaben Stichabnahmen und Walzkräfte berechnet. Bei der Stichplanberechnung werden auch die Bandtemperaturen ermittelt, die der Bandkopf bei jedem Gerüst und am Auslauf der Fertigstraße unter dem Endwalztemperaturmessplatz annimmt. Weiterhin wird eine geeignete Bandkopfgeschwindigkeit derart ermittelt, dass der Bandkopf eine vorgegebene Endwalztemperatur erreicht. Die erwarteten Werte an den Walzgerüsten während des Durchlaufs des Kopfsegmentes werden der Basisautomatisierung zur Initialisierung ihrer Regelkreise zur Verfügung gestellt.

Der Prozessrechner führt nach dem Walzen eines Bandes üblicherweise auch eine Nachberechnung durch. Bei der Nachberechnung werden ebenfalls Bandsegmente benutzt. Üblicherweise wird das gesamte Band in eine Vielzahl Segmente unterteilt, jedoch werden nicht immer alle Segmente tatsächlich für die Adaption ausgewertet. Es kann sein, dass für die Adaption tatsächlich nur ein einziges Segment ausgewertet wird, beispielsweise Segment Nr. 5, und die Ergebnisse aller übrigen Segmente wieder verworfen werden. Anhand der Nachberechnung wird die Adaption vorgenommen.

Während das Band durch die Fertigstraße läuft, werden jedem Bandsegment auf seinem Weg durch die Fertigstraße Messwerte für Walzkräfte, Momente, Züge, Banddicken, Temperaturen usw. zugeordnet und diese Werte bei dem Bandsegment gespeichert. Dabei werden auch Momentanwerte benachbarter Gerüste gespeichert, um später bei der Nachberechnung bessere Schätzwerte für die Einlaufdicke zu bekommen. Die Nachberechnung wird erst nach Durchlauf des Segments durch die gesamte Fertigstraße durchgeführt.

Die Nachberechnung selbst ist in drei Schritte unterteilt.

Im ersten Schritt wird zunächst für jedes Gerüst die Nullpunktkorrektur berechnet. Die Nullpunktkorrektur ist eine additive Konstante, mit der die Anstellung des jeweiligen Gerüstes korrigiert wird. Nach der Nullpunktkorrektur soll das letzte Gerüst bei Einstellung der gemessenen Anstellung auch in der Modellberechnung exakt die gemessene Ausgangsdicke produzieren und jedes vorgelagerte Gerüst soll so korrigiert sein, dass für den Fall eines stationären Zustandes der Straße jedes Gerüst auch in der Modellberechnung denselben Massenfluss besitzt wie das letzte Gerüst. Das ist in der realen Fertigstraße der Fall, weil im Falle einer dauerhaften Abweichung das Band reißen oder sich zwischen den Walzgerüsten eine Schlinge bilden würde. Weiteres Ergebnis dieser Korrekturberechnung sind genauere Werte aller Zwischendicken, das sind die Banddicken des Segmentes, die nach Verlassen des vorgeordneten Gerüstes aufgetreten sind und mit denen das Segment logischerweise wieder in das nachgeordnete Gerüst eintritt. Die Eintrittsdicke in das erste Gerüst wird als bekannt vorausgesetzt. Damit können die Nullpunktkorrekturen aller Gerüste ermittelt und bei den Gerüsten gespeichert werden. Da die Nullpunktkorrekturen nicht vom gewalzten Material, sondern nur von der Physik in den Gerüsten abhängen, werden diese in jedem Falle an das nächste Band weitervererbt, ggf. mit einem Faktor gedämpft.

Im zweiten Schritt erfolgt eine Nachberechnung erwarteter Eintrittstemperaturen in die Gerüste. Diese kann man berechnen, indem man das Temperaturmodell mit den gemessenen und beim Segment gespeicherten Werten für das Drehmoment, die Walzendrehzahl und die Walzkraft versorgt und daraus unter Verwendung der ebenfalls beim Segment gespeicherten Züge die mechanische Arbeit berechnet, die in die Umformung bzw. die Reibung zwischen Walze und Material geht. Daraus kann man die Wärmemenge berechnen, die dem Material im Innern bzw. an der Oberfläche zugeführt wird. Durch Vergleich der gerechneten Materialtemperatur mit der Messung am Endwalztemperaturmessgerät kann man das Temperaturmodell korrigieren und somit auch alle gerechneten Gerüsteintrittstemperaturen aktualisieren.

Schließlich werden in einem dritten Schritt unter Verwendung des Walzkraftmodells des Prozessrechners erwartete Werte für Walzkräfte und Drehmomente berechnet. Für jedes Gerüst wird die berechnete Walzkraft mit der gemessenen Walzkraft verglichen und ein Korrekturfaktor für die Fließspannung des Materials, mit dem das Walzkraftmodell korrigiert wird, solange verändert, bis die berechnete Walzkraft mit der gemessenen Walzkraft hinreichend genau übereinstimmt.

Das Drehmoment fällt beim Walzkraftmodell als Nebenprodukt an. Dazu müssen lediglich die Züge berücksichtigt und die durch die Druckverteilung im Walzspalt entstehenden Beiträge zum Drehmoment integriert werden. Stimmt nach Anpassung des Walzkraftmodells an die gemessene Walzkraft das Drehmoment noch nicht mit der Messung überein, so wird ein Korrekturfaktor an das Drehmoment multipliziert, der so angepasst ist, dass nach Multiplikation des gerechneten Drehmomentes mit diesem Faktor das gemessene Drehmoment herauskommt.

Diese Korrekturwerte werden für jedes produzierte Band ermittelt und in einer Langzeitvererbung, z. B. in neuronalen Netzen, gespeichert.

Für das nächste zu produzierende Band stehen dann korrigierte Modelle zur Verfügung. Dabei werden in einer so genannten Vorausberechnung für zumindest ein Segment am Bandkopf Prognosen der Walzkräfte, Drehmomente, Temperaturen, Banddicken usw. berechnet und die Anstellungen der Gerüste im Sinne einer Iteration geeignet derart modifiziert, dass mit jedem Gerüst eine gewünschte vorgegebene Dickenreduktion des Materials erreicht wird.

Bei der Endwalztemperaturregelung, die im Prozessrechner ausgeführt wird, gibt es im Stand der Technik bereits ein Verfahren, das in Echtzeit arbeitet, siehe die oben genannte DE 101 56 008 A1.

Um ein solches Verfahren sinnvoll ausführen zu können, muss das Problem der Adaption (Modellkorrektur) so gelöst werden können, dass im Falle einer Änderung der Modellkorrektur nicht alle bisher getroffenen Berechnungen obsolet werden. Andernfalls müsste man sich wie oben alle Beeinflussungen merken und zu dem Zeitpunkt, an dem der betrachtete Bandpunkt das Endwalztemperaturmessgerät erreicht, die Repräsentation des Abschnittes im Modell beginnend am Einlauf der Fertigstraße mittels der gespeicherten Beeinflussungen bis zum Endwalztemperaturmessplatz durchrechnen, also eine rein rückschauende Berechnung durchführen.

Bezüglich der Temperatur wird das Problem bereits durch die Lehre der DE 101 56 008 A1 und der korrespondierenden US-Schrift gelöst. Die Lösung besteht darin, dass von dem Modell zusätzlich zu den erwarteten Isttemperaturen funktionale Abhängigkeiten der erwarteten Isttemperaturen von einem Korrekturfaktor ermittelt werden, dass nach dem Auslaufen der Bandpunkte aus der Fertigstraße deren Endtemperaturen erfasst werden, dass anhand der erfassten Temperaturen und der ermittelten erwarteten Endtemperaturen der Korrekturfaktor bestimmt wird und dass die erwarteten Isttemperaturen der bereits erfassten Bandpunkte anhand des Korrekturfaktors korrigiert werden.

Die Basisautomatisierung übernimmt, wie ebenfalls bereits erwähnt, im Wesentlichen die Berechnungen des Prozessrechners für den Bandkopf und führt dann entlang des Bandes in Echtzeit eine Regelung aus. Vorzugsweise wird mit einer so genannten AGC zunächst eine Korrektur der berechneten Austrittsdicke durchgeführt, indem die gemessene Walzkraft mit der erwarteten Walzkraft verglichen wird und über die Federkonstante des Gerüstes gemäß dem (linearisierten) Hook'schen Gesetz eine Korrektur der Austrittsdicke erfolgt. Ist beispielsweise die gemessene Walzkraft größer als erwartet, wird das Gerüst stärker aufgedrückt als erwartet, die berechnete Austrittsdicke muss also nach oben korrigiert werden. Da man das nicht will, wird durch Erhöhen der Anstellung des Gerüstes der Walzspalt sofort um einen entsprechenden Betrag verringert, damit wieder die gewünschte Austrittsdicke entsteht.

Zudem ist die Basisautomatisierung verantwortlich für die Einstellung vorgegebener Züge und Anstellpositionen der Schlingenheber (Looper). Dazu werden die Züge mit den Loopern eingestellt und die Motordrehzahlen der Gerüstmotoren ständig so angepasst, dass die Looper in einer bestimmten Stellung zur Ruhe kommen.

Auch die Dickenregelung befindet sich in der Basisautomatisierung. Sobald eine gemessene Banddicke zur Verfügung steht (d. h., der Bandkopf ist aus der Straße ausgetreten), kann man die gemessene Dicke mit der erwarteten Banddicke vergleichen und den Fehler im Sinne einer Nullpunktkorrektur auf den Nullpunkt der Anstellung aufschalten. Da in der Regel nur hinter dem letzten Gerüst die Dicke gemessen wird, muss der Fehler in der Regel über mehrere Gerüste verteilt werden. Eine relativ einfache Steuerung korrigiert die Anstellungen der Gerüste ausgehend vom letzten Gerüst und passt ggf. auch die Gerüstdrehzahlen geeignet an.

Es gibt bei der Basisautomatisierung auch Ansätze, im Sinne einer Vorsteuerung Temperatur und Eintrittsdicke zu verfolgen. Der Ansatz funktioniert so: Am ersten Gerüst wird die Austrittsdicke eingestellt. Diese wird mit dem Band wegverfolgt. Auf diese Weise kennt man am nächsten Gerüst einen genauen Wert für die Eintrittsdicke. Mittels eines linearisierten Modells wird die erwartete Walzkraft am zweiten Gerüst berechnet und für das zweite Gerüst eine Vorsteuerung der Anstellung ermittelt, die auf die Anstellung des zweiten Gerüstes als Korrektur aufgeschaltet wird. Nun wird am zweiten Gerüst die Walzkraft auch gemessen. Wird eine Abweichung der gemessenen Walzkraft von der erwarteten Walzkraft festgestellt, so wird angenommen, dass der Fehler auf eine Abweichung der Eintrittstemperatur zurückzuführen ist. Nun werden Austrittstemperatur und Austrittsdicke beim Bandpunkt gespeichert, der Bandpunkt wegverfolgt bis zum dritten Gerüst. Dort wird wie folgendermaßen verfahren: Ein Temperaturmodell wird ausgewertet, das rückschauend anhand der abgelaufenen Zeit und gespeicherten Daten die erwartete Eintrittstemperatur ermittelt. Das Gerüst wird anhand Eintrittsdicke und errechneter Eintrittstemperatur vorgesteuert, und die Walzkraft beim Durchlauf wird gemessen. Abweichungen werden wieder als Temperaturabweichungen angegeben. Eine Berechnung der Temperatur in Echtzeit erfolgt nicht.

Im Stand der Technik führt somit nur die Basisautomatisierung Berechnungen in Echtzeit aus. Diese besitzt aber keine durchgängige Verfolgung von Isttemperaturen und mindestens einem Istgeometriewert durch die Fertigstraße, bei denen von vorgelagerten Gerüsten eingestellte oder gemessene Werte bei gerade vorbeilaufenden Bandabschnitten gespeichert, mit dem Band in Bandsegmenten mitverfolgt und einem Modell für Temperatur und Bandgeometrie zugeführt werden.

Der Prozessrechner, der Messwerte und Rechenwerte in Bandsegmenten speichert und mitverfolgt, führt keine Berechnungen in Echtzeit aus. Dessen Berechnungen werden ausgeführt, wenn der betrachtete Bandabschnitt die Fertigstraße bereits verlassen hat. Sie sind damit rein rückschauend. Einzige Ausnahme ist die Berechnung der Bandtemperatur im Bandtemperaturmonitor für die Endwalztemperaturregelung. Hier werden die Eintrittstemperatur und ggf. auch die Eintrittsdicke erfasst, beide auch verfolgt und in Echtzeit aktualisiert, aber nur einem Temperaturmodell zugeführt. Von einem Modell, das auch die Band-geometrie beschreibt, ist nicht die Rede. Diese kommt bei den Gerüsten von außen.

Die Aufgabe der vorliegenden Erfindung besteht darin, Möglichkeiten zu schaffen, mittels derer eine Optimierung des Modells der Fertigstraße auch dann möglich ist, wenn mittels des Modells der Fertigstraße auch die Geometrie des Bandes modelliert wird.

Die Aufgabe wird durch ein Ermittlungsverfahren mit den Merkmalen des Anspruchs 1 gelöst. Vorteilhafte Ausgestaltungen des erfindungsgemäßen Ermittlungsverfahrens sind Gegenstand der abhängigen Ansprüche 2 bis 13.

Erfindungsgemäß ist bei einem Ermittlungsverfahren für Temperatur und Geometrie eines eine Fertigstraße mit mehreren Walzgerüsten durchlaufenden Warmbandes vorgesehen,

- dass spätestens beim Einlaufen von Bandpunkten des Warmbandes in die Fertigstraße für den jeweils einlaufenden Bandpunkt eine Anfangstemperatur und eine Anfangsgeometrie erfasst werden,
- dass die Anfangstemperatur und die Anfangsgeometrie des jeweiligen Bandpunktes dem jeweiligen Bandpunkt als Isttemperatur und als Istgeometrie zugeordnet werden,
- dass die Bandpunkte beim Durchlaufen der Fertigstraße wegverfolgt werden,
- dass das Warmband in der Fertigstraße Temperaturbeeinflussungen und Geometriebeeinflussungen unterworfen wird,
- dass mittels eines Modells anhand der Isttemperaturen, der Istgeometrie, der Temperaturbeeinflussungen und der Geometriebeeinflussungen unter Berücksichtigung der Wegverfolgung in Echtzeit neue Isttemperaturen und neue Istgeometrien der erfassten Bandpunkte ermittelt und den erfassten Bandpunkten zugeordnet werden, so dass die Isttemperaturen und die Istgeometrien der in die Fertigstraße eingelaufenen Bandpunkte während des Durchlaufs der Bandpunkte durch die Fertigstraße jederzeit zur Verfügung stehen,
- dass nach dem Auslaufen der Bandpunkte aus der Fertigstraße deren Endgeometrien erfasst werden,
- dass unter Verwendung der jeweils erfassten Endgeometrie und der Istgeometrie Korrekturfaktoren für die Modellierung der Walzgerüste durch das Modell ermittelt werden und
- dass mittels des Modells zusätzlich zu den Istgeometrien funktionale Abhängigkeiten der Istgeometrien von den Korrekturfaktoren ermittelt werden, so dass die Istgeometrien der bereits in die Fertigstraße eingelaufenen Bandpunkte während ihres Durchlaufs durch die Fertigstraße anhand der Korrekturfaktoren korrigierbar sind.

Es werden also während des Durchlaufs des jeweils betrachteten Bandpunktes Messwerte und Rechenwerte dem Bandpunkt zugeordnet und mit diesem mitverfolgt. Im Unterschied zum Stand der Technik werden aber Berechnungen bereits ausgeführt und dem Bandpunkt zugeordnet, noch während sich der betrachtete Bandpunkt in der Fertigstraße befindet. Hierbei wird auch ein Modell für die Banddicke in Echtzeit ausgewertet. Die vorliegende Erfindung liefert somit ein durchgängiges vollständiges Konzept der Verfolgung einschließlich Fehlerkorrektur.

Es ist möglich, zur Ermittlung der Korrekturfaktoren ausschließlich die ermittelte Enddicke herauszuziehen. Beispielsweise kann anhand der erfassten Enddicke eines bestimmten Bandpunktes hinter dem letzten Walzgerüst der Fertigstraße auf die Dicke geschlossen werden, die dieser Bandpunkt vor dem letzten Walzgerüst aufwies. In analoger Weise können somit nach und nach auch die Dicken ermittelt werden, die der betreffende Bandpunkt vor dem vorletzten, vor dem drittletzten usw. Walzgerüst der Fertigstraße aufwies. Anhand der ermittelten Dicken können sodann die Korrekturfaktoren für die einzelnen Walzgerüste bestimmt werden. Vorzugsweise jedoch ist vorgesehen, im Rahmen des Modells der Fertigstraße auch erwartete gepufferte Bandlängen oder deren Änderungen zu ermitteln. Beispielsweise können zu diesem Zweck die Korrekturfaktoren für die Modellierung der Walzgerüste der Fertigstraße durch das Modell unter Verwendung auch der gepufferten Bandlängen oder deren Änderungen ermittelt werden.

Die Auswertung der gepufferten Bandlängen oder deren Änderungen kann beispielsweise dadurch erfolgen, dass mindestens ein Korrekturfaktor für das vom Metall-Warmband als letztes durchlaufene Walzgerüst anhand der jeweils erfassten Endgeometrie und der Istgeometrie ermittelt wird und dass jeweils mindestens ein Korrekturfaktor für je ein anderes Walzgerüst unter Berücksichtigung der erwarteten gepufferten Bandlängen oder deren Änderungen ermittelt wird.

Pro Walzgerüst muss in der Regel jeweils mindestens ein Korrekturfaktor bestimmt werden. Manchmal müssen sogar zwei oder drei Korrekturfaktoren bestimmt werden. Wenn in einem derartigen Fall alle Korrekturfaktoren bei der Modellierung explizit berücksichtigt werden, erfordert dies einen extrem hohen Rechenaufwand. Zur Minimierung des Rechenaufwandes ist daher vorzugsweise vorgesehen, für das vom Metall-Warmband als erstes durchlaufene Walzgerüst funktionale Abhängigkeiten von einer Anzahl von Korrekturfaktoren zu ermitteln, die die Modellierung dieses Walzgerüsts beeinflussen, für alle anderen Walzgerüste funktionale Abhängigkeiten von einer Anzahl von Korrekturfaktoren zu ermitteln, die die Modellierung des jeweiligen anderen Walzgerüsts beeinflussen, und für alle anderen Walzgerüste zusätzlich eine funktionale Abhängigkeit von einem Parameter zu ermitteln, der von der Gesamtheit der Modellierung der dem betrachteten Walzgerüst vorgeordneten Walzgerüste abhängig ist.

Durch diese Ausgestaltung ergibt sich ein Rechenaufwand, der zwar linear mit der Anzahl an funktionalen Abhängigkeiten ansteigt, aber auch mit der Anzahl an Walzgerüsten nur linear ansteigt.

Die funktionalen Abhängigkeiten können beispielsweise dadurch bestimmt werden, dass für eine Anzahl von Tupeln der Korrekturfaktoren jeweils die sich für den jeweiligen Tupel ergebenden erwarteten Größen ermittelt werden, dass die Anzahl von Tupeln eins größer als die Anzahl von Korrekturfaktoren ist und dass die neuen Istgeometrien der erfassten Bandpunkte durch Interpolation oder Extrapolation ermittelt werden.

Dadurch ist es zwar erforderlich, im Falle einer Neubestimmung der Korrekturfaktoren zunächst eine Interpolation für das erste Walzgerüst durchzuführen, sodann eine Interpolation für das zweite Walzgerüst durchzuführen usw.. Dennoch ergibt sich durch die Linearisierung im Arbeitspunkt eine erhebliche Beschleunigung, da eine Interpolation erheblich einfacher und schneller durchzuführen ist als eine Modellrechnung.

Die Korrekturfaktoren für das vom Metall-Warmband jeweils durchlaufene Walzgerüst weisen zum Zeitpunkt der Ermittlung der funktionalen Abhängigkeiten aktuelle Werte auf. In einer bevorzugten Ausgestaltung der vorliegenden Erfindung werden die Tupel derart bestimmt, dass sie ein aktuelles Wertetupel, das sich aufgrund der aktuellen Werte ergibt, umgeben. Dadurch ergibt sich eine weitere - wenn auch nur noch kleine - Verbesserung.

In der Regel werden anhand der ermittelten Korrekturfaktoren zumindest die Nullpunkte der Walzspalte der Walzgerüste korrigiert.

In der Regel werden die Walzkräfte ebenfalls erfasst. In diesem Fall ist es möglich, dass nach dem Korrigieren der Nullpunkte anhand der erfassten Walzkräfte und erwarteter Walzkräfte mindestens ein weiterer Korrekturfaktor für die Modellierung der von den Walzgerüsten aufzubringenden Walzkräfte ermittelt wird.

In einer bevorzugten Ausgestaltung der vorliegenden Erfindung werden weiterhin mittels Schlingenhebern Istgeschwindigkeiten erfasst, mit denen das Metall-Warmband den jeweiligen Schlingenheber passiert. Durch diese Ausgestaltung ist eine verbesserte Modellierung der Vor- und Nacheilung möglich.

Es ist möglich, das erfindungsgemäße Ermittlungsverfahren als reinen Beobachter zu konzipieren, der nicht in die Steuerung der Fertigstraße eingreift. Vorzugsweise ist jedoch vorgesehen, dass den erfassten Bandpunkten Sollgeometrien zugeordnet werden, dass mittels des Modells anhand der den erfassten Bandpunkten zugeordneten Sollgeometrien Ansteuerwerte für die Walzgerüste ermittelt werden und dass die Ansteuerwerte den Walzgerüsten zugeführt werden. Mittels des erfindungsgemäßen Ermittlungsverfahrens ist es insbesondere möglich, dass die Sollgeometrien den Bandpunkten individuell zugeordnet werden. Die einem einzelnen Bandpunkt zugeordnete Sollgeometrie kann hierbei als örtlicher oder zeitlicher Verlauf ausgebildet sein.

Es ist ausreichend, wenn das erfindungsgemäße Ermittlungsverfahren zyklisch durchgeführt wird. Vorzugsweise jedoch wird es getaktet ausgeführt.

Die Aufgabe wird weiterhin durch ein Computerprogramm der eingangs genannten Art gelöst. In diesem Fall bewirkt die Abarbeitung des Maschinencodes durch den Rechner, dass der Rechner ein erfindungsgemäßes Ermittlungsverfahren ausführt.

Die Aufgabe wird weiterhin durch einen Rechner gelöst, der derart ausgebildet ist, dass er ein erfindungsgemäßes Ermittlungsverfahren ausführt.

Die Aufgabe wird weiterhin durch eine Fertigstraße mit mehreren Walzgerüsten zum Walzen von Metall-Warmband gelöst, die mit einem erfindungsgemäßen Rechner ausgestattet ist.

Weitere Vorteile und Einzelheiten ergeben sich aus der nachfolgenden Beschreibung von Ausführungsbeispielen in Verbindung mit den Zeichnungen. Es zeigen in Prinzipdarstellung:

FIG 1          schematisch eine Fertigstraße,
FIG 2          schematisch ein Metall-Warmband,
FIG 3          ein Ablaufdiagramm,
FIG 4          einen Ausschnitt der Fertigstraße von FIG 1,
FIG 5          ein Ablaufdiagramm,
FIG 6          ein Walzvorgang,
FIG 7 und 8    Ablaufdiagramme,
FIG 9          ein Wertediagramm und
FIG 10 bis 13  Ablaufdiagramme.

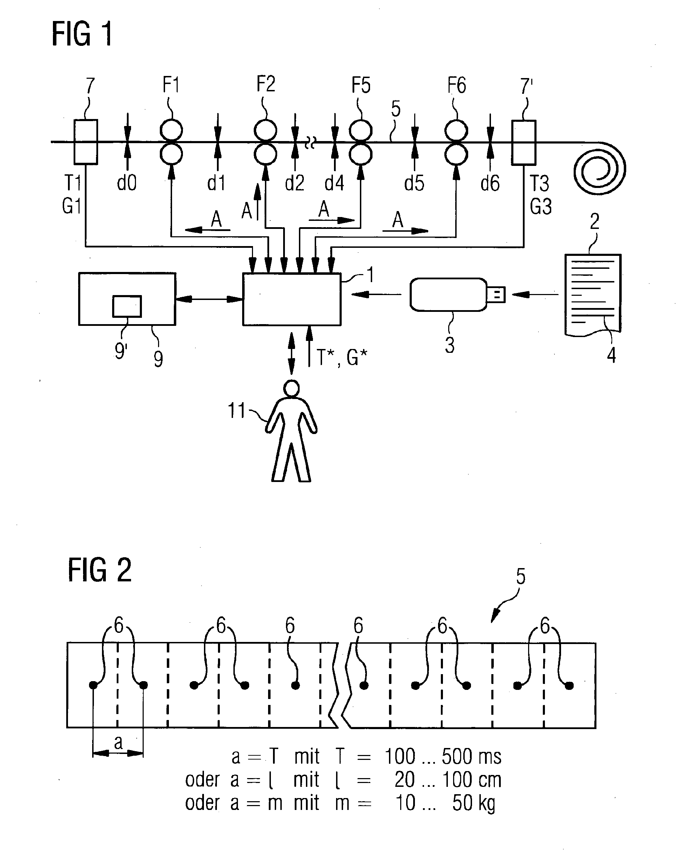

Gemäß FIG 1 weist eine Fertigstraße mehrere Walzgerüste auf. Die Walzgerüste sind in FIG 1 entsprechend der üblichen Nummerierung als F1, F2, usw. bezeichnet. Die Anzahl an Walzgerüsten F1, F2, ... kann nach Bedarf bestimmt sein. In der Regel liegt sie zwischen 4 und 8. Dargestellt ist in FIG 1 eine Fertigstraße mit sechs Walzgerüsten F1...F6. Auf diese Ausgestaltung beziehen sich die nachfolgenden Ausführungen.

Falls mehr oder weniger Walzgerüste F1, F2,... vorhanden sind - beispielsweise 5 oder 7 -, müssen die nachfolgenden Ausführungen entsprechend angepasst werden.

Die Fertigstraße wird von einem Steuerrechner 1 gesteuert. Der Steuerrechner 1 ist gemäß FIG 1 mit einem Computerprogramm 2 programmiert. Das Computerprogramm 2 ist dem Steuerrechner 1 über ein geeignetes Speichermedium 3 (beispielsweise einem USB-Memorystick) oder über eine Rechner-Rechner-Verbindung zugeführt worden. Das Computerprogramm 2 legt die Wirkungsweise des Steuerrechners 1 fest. Die Ausführung des Computerprogramms 2 bewirkt also die entsprechende Ausgestaltung des Steuerrechners 1.

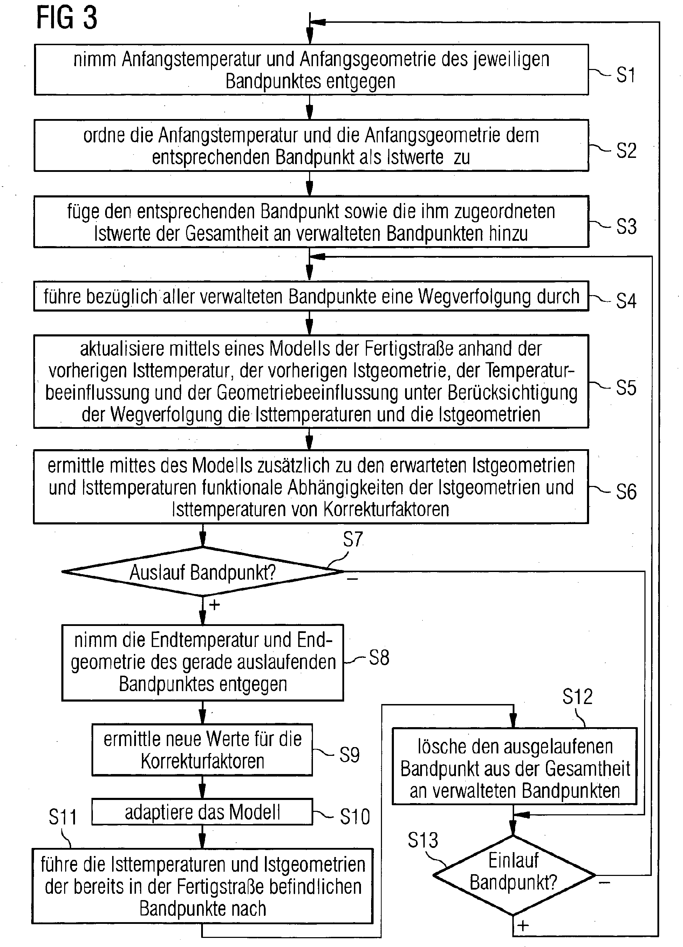

Das Computerprogramm 2 umfasst Maschinencode 4. Der Maschinencode 4 ist von dem Steuerrechner 1 unmittelbar abarbeitbar. Die Abarbeitung des Maschinencodes 4 bewirkt, dass der Steuerrechner 1 ein Ermittlungsverfahren ausführt. Das Ermittlungsverfahren wird nachfolgend in Verbindung mit FIG 3 näher erläutert. Vorab wird jedoch darauf hingewiesen, dass der Rechner 1 im vorliegenden Fall - eben weil er die Fertigstraße steuert - als Steuerrechner ausgebildet ist. Für viele (wenn auch nicht alle) Ausgestaltungen der Erfindung ist es jedoch ausreichend, wenn der Rechner 1 zwar von der Fertigstraße Messgrößen entgegen nimmt, jedoch nicht selbst und direkt auf die Fertigstraße einwirkt. Für diese Ausgestaltungen ist es ausreichend, dass der Rechner 1 als "normaler", die Fertigstraße nicht steuernder Rechner ausgebildet ist.

In den Walzgerüsten F1...F6 der Fertigstraße wird ein Metall-Warmband 5 gewalzt. Das Metall-Warmband 5 kann beispielsweise aus Stahl, Aluminium oder Kupfer bestehen. Das in die Fertigstraße einlaufende Warmband 5 wird gemäß FIG 2 bezüglich seiner Repräsentation im Steuerrechner 1 gedanklich in eine Vielzahl von Bandpunkten 6 aufgeteilt. Jede bezüglich eines der Bandpunkte 6 getroffene Aussage gilt selbstverständlich für einen entsprechenden Längenbereich des Warmbandes 5, wobei Trennungslinien zwischen den Bandpunkten 6 üblicherweise in der Mitte zwischen den Bandpunkten 6 liegen. Anstelle des Begriffs "Bandpunkte" könnten daher ebenso die Begriffe "Bandsegmente" und "Bandabschnitte" verwendet werden. Gemeint ist in allen drei Fällen stets dasselbe.

Die Anzahl an Bandpunkten 6 beträgt in der Regel mehrere 100 bis über 1000 Bandpunkte 6. Ein Abstand a der Bandpunkte 6 voneinander kann beispielsweise durch einen festen Zeittakt T definiert sein. Der Zeittakt T liegt in diesem Fall in der Regel bei 100...500 ms, beispielsweise bei 150...300 ms. Alternativ kann der Abstand a durch einen geometrischen Abstand von beispielsweise 20...100 cm definiert sein. Vorzugsweise ist der Abstand a zwischen den Bandpunkten 6 durch die zwischen jeweils zwei Bandpunkten 6 befindliche Masse an Warmband 5 definiert. In diesem Fall kann der Abstand a beispielsweise zwischen 10...50 kg liegen, insbesondere zwischen 15...30 kg.

Beim Einlaufen in die Fertigstraße weist das Warmband 5 eine Anfangsgeometrie G1 auf. Die Anfangsgeometrie G1 umfasst zumindest eine Anfangsdicke d0 des Bandes 5, ggf. auch eine Anfangsplanheit und/oder ein Anfangsprofil. Die Anfangsgeometrie G1 ist in der Regel für jeden Bandpunkt 6 separat definiert. Jeder Bandpunkt 6 weist beim Einlaufen in die Fertigstraße weiterhin eine Anfangstemperatur T1 auf.

Die Anfangstemperatur T1 kann ein einzelner Wert sein, beispielsweise der Wert unmittelbar am Zentrum des durch den Bandpunkt 6 definierten Bandsegmentes. Beispielsweise kann die Temperatur an der Ober- oder Unterseite oder - in Banddickenrichtung gesehen - in der Mitte des entsprechenden Ortes verwendet werden. Alternativ kann es sich um ein Temperaturverteilung handeln. Die Temperaturverteilung kann in diesem Fall in Banddickenrichtung, in Bandbreitenrichtung und/oder evtl. auch in Bandlängsrichtung ortsaufgelöst sein. Auch eine Mittelwertbildung in einer oder mehrerer der genannten Richtungen ist möglich. Auch sind Kombinationen möglich. Beispielsweise kann in Bandbreitenrichtung ortsaufgelöst die Temperatur an der Oberseite verwendet werden. Weiterhin kann anstelle der Temperatur auch die Enthalpie verwendet werden. Ggf. können weiterhin Phasenanteile und Kenngrößen für Materialeigenschaften wie beispielsweise die Korngröße und/oder die Verfestigung berücksichtigt werden.

In analoger Weise kann die Anfangsgeometrie G1 ein einzelner Wert sein, beispielsweise die Banddicke unmittelbar am Zentrum des durch den Bandpunkt 6 definierten Bandsegmentes. Alternativ kann es sich um ein Geometrieverteilung handeln. Die Geometrieverteilung kann im Falle der Banddicke in Bandbreitenrichtung und evtl. auch in Bandlängsrichtung ortsaufgelöst sein. Im Falle des Bandprofils und/oder der Bandplanheit kann die Geometrieverteilung evtl. in Bandlängsrichtung ortsaufgelöst sein. Analog zur Temperaturverteilung ist auch eine Mittelwertbildung in Bandlängsrichtung, im Falle der Banddicke alternativ oder zusätzlich auch in Bandbreitenrichtung, möglich.

Spätestens beim Einlaufen des jeweiligen Bandpunktes 6 in die Fertigstraße - also spätestens dann, wenn der jeweilige Bandpunkt 6 das erste Walzgerüst F1 erreicht - werden dessen Anfangstemperatur T1 und dessen Anfangsgeometrie G1 erfasst. Die genannten Werte G1, T1 nimmt der Steuerrechner 1 gemäß FIG 3 in einem Schritt S1 entgegen.

Es ist möglich und sogar üblich, dass die genannten Werte T1, G1 - insbesondere die Anfangstemperatur T1 - mittels einer entsprechenden Messeinrichtung 7 (siehe FIG 1) messtechnisch erfasst werden. Es ist jedoch alternativ möglich, die Werte T1, G1 anderweitig zu erfassen. Beispielsweise können die genannten Werte T1, G1 dem Steuerrechner 1 von einer übergeordneten Recheneinrichtung oder von einem anderen Steuerrechner, der eine der Fertigstraße vorgeordnete Anlage steuert, zugeführt werden. Beispiele derartiger vorgeordneter Anlagen sind ein Ofen, eine Vorstraße und eine Stranggießanlage.

Der Steuerrechner 1 ordnet die Anfangstemperatur T1 und die Anfangsgeometrie G1 dem entsprechenden Bandpunkt 6 in einem Schritt S2 als entsprechende Istwerte T2, G2 zu. Weiterhin fügt der Steuerrechner 1 in einem Schritt S3 den entsprechenden Bandpunkt 6 sowie die ihm zugeordneten Istwerte T2, G2 der Gesamtheit an der Zeit vom Steuerrechner 1 verwalteten Bandpunkten 6 hinzu.

Für die Isttemperatur T2 und die Istgeometrie G2 gelten die obigen Ausführungen zur Anfangstemperatur T1 und zur Anfangsgeometrie G1 analog.

In einem Schritt S4 führt der Steuerrechner 1 bezüglich aller derzeit verwalteten Bandpunkte 6 eine Wegverfolgung durch. Der Steuerrechner 1 ermittelt also für jeden verwalteten Bandpunkt 6, wo sich der entsprechende Bandpunkt 6 momentan befindet. Wegverfolgungen und deren Implementierung sind im Stand der Technik allgemein bekannt. Detailausführungen hierzu sind somit nicht erforderlich.

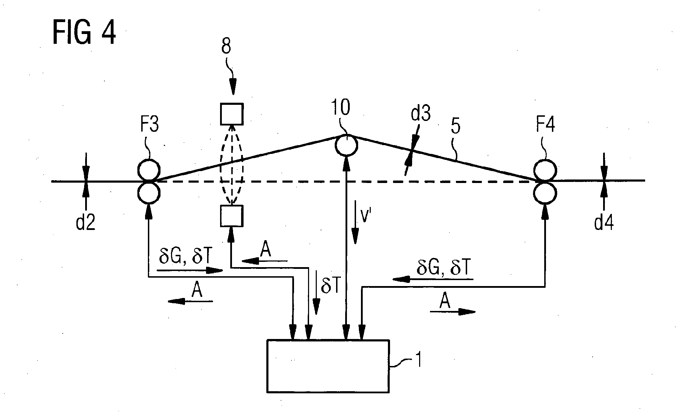

Das Warmband 5 wird in der Fertigstraße Geometriebeeinflussungen δG unterworfen. Insbesondere wird das Warmband 5 in den Walzgerüsten F1...F6 umgeformt, so dass es hinter jedem Walzgerüst`F1...F6 auslaufseitig neue Geometrieparameter umfasst, insbesondere neue Auslaufdicken d1...d6. Weiterhin wird das Warmband 5 in der Fertigstraße Temperaturbeeinflussungen δT unterworfen. Insbesondere erfolgt durch das Walzen als solches bereits eine Temperaturbeeinflussung. Weiterhin können zwischen den Walzgerüsten F1...F6 - siehe rein beispielhaft FIG 4 - Zwischengerüstkühleinrichtungen 8 angeordnet sein, mittels derer ein flüssiges Kühlmedium auf das Warmband 5 aufgebracht wird. Auch erfolgt stets zwischen den Walzgerüsten F1...F6 eine Abstrahlung von Wärmeenergie.

Der Steuerrechner 1 aktualisiert in einem Schritt S5 laufend die Isttemperatur T2 und die Istgeometrie G2 der Bandpunkte 6. Er verwendet hierzu ein Modell 9 der Fertigstraße. Der Steuerrechner 1 berücksichtigt bei der Aktualisierung der Isttemperaturen T2 und der Istgeometrien G2 Korrekturfaktoren $S_k$ des Modells 9, welche ihrerseits die Modellierung der Walzgerüste F1...F6 der Fertigstraße beeinflussen. Entsprechende Modelle sind Fachleuten allgemein bekannt.

Der Steuerrechner 1 ermittelt also mittels des Modells 9 der Fertigstraße laufend neue Isttemperaturen T2 und neue Istgeometrien G2 der Bandpunkte 6 und ordnet diese neuen Werte T2, G2 dem entsprechenden Bandpunkt 6 wieder zu. Die Ermittlung erfolgt - selbstverständlich - anhand der vorherigen Isttemperatur T2, der vorherigen Istgeometrie G2, der Temperaturbeeinflussung δT und der Geometriebeeinflussung δG. Selbstverständlich berücksichtigt der Steuerrechner 1 weiterhin hierbei die Wegverfolgung, da er ermitteln muss, wann - bezogen auf den jeweiligen Bandpunkt 6 - welcher Walzvorgang erfolgt und wann welche Zwischengerüstkühleinrichtung 8 auf den Bandpunkt 6 wirkt.

Es werden also bereits während des Durchlaufs des betrachteten Bandpunktes 6 Messwerte und Rechenwerte dem Bandpunkt 6 zugeordnet und mit diesem mitverfolgt. Im Unterschied zum Stand der Technik bezüglich der Prozessautomatisierung (Nachberechnung) werden aber Berechnungen bereits ausgeführt und dem Bandpunkt 6 zugeordnet, noch während sich der betrachtete Bandpunkt 6 in der Fertigstraße befindet. Im Unterschied zum Stand der Technik bezüglich der Temperaturregelung im Prozessrechner 1 wird auch ein Modell zumindest für die Banddicke in Echtzeit ausgewertet. Im Unterschied zum Stand der Technik bei der Basisautomatisierung gibt es ein durchgängiges vollständiges Konzept der Verfolgung einschließlich Fehlerkorrektur.

Bei der vorliegenden Erfindung werden also die Messwerte im Unterschied zum Stand der Technik nicht erst gespeichert und dann die Nachberechnung mit Durchlauf eines jeden Segmentes 6 durch eine Dickenmesseinrichtung durchgeführt (wobei im Stand der Technik jedes Segment 6 noch mal gedanklich an den Einlauf der Fertigstraße zurückverlegt und simultan und unabhängig voneinander durch jedes Gerüst F1...F6 geschoben wird, wobei die gespeicherten Werte abgerufen werden), sondern es wird in Echtzeit der Zustand eines jeden Segmentes 6 zusammen mit den Zuständen der Straße verfolgt und unmittelbar ausgewertet. Dadurch stehen die Isttemperaturen T2 und die Istgeometrien G2 der in die Fertigstraße eingelaufenen Bandpunkte 6 während des Durchlaufs der Bandpunkte 6 durch die Fertigstraße jederzeit zur Verfügung.

Es ist zwar möglich, die Messwerte abzuspeichern, so dass sie für eine spätere Nachberechnung zur Verfügung stehen. Es kann jedoch sein, dass es nicht mehr notwendig ist, überhaupt noch Messwerte für spätere Nachberechnungen zu speichern.

Weiterhin ermittelt der Steuerrechner 1 mittels des Modells 9 in einem Schritt S6 zusätzlich zu den erwarteten Istgeometrien G2 und Isttemperaturen T2 funktionale Abhängigkeiten der Istgeometrien G2 und Isttemperaturen T2 von den bereits erwähnten Korrekturfaktoren $s_k$. Aufgrund der Ermittlung der funktionalen Abhängigkeiten ist es möglich, die Istgeometrien G2 und die Isttemperaturen T2 der bereits in die Fertigstraße eingelaufenen Bandpunkte 6 während ihres Durchlaufs durch die Fertigstraße zu korrigieren. Sowohl die Ermittlungen der funktionalen Abhängigkeiten als auch die Art und Weise der Korrektur werden später eingehend erläutert werden.

In einem Schritt S7 prüft der Steuerrechner 1, ob einer der Bandpunkte 6 aus der Fertigstraße ausläuft. Falls dies der Fall ist, werden - siehe FIG 1 - mittels einer entsprechenden Messeinrichtung 7', die (tatsächliche) Endtemperatur T3 und die (tatsächliche) Endgeometrie G3 des gerade auslaufenden Bandpunktes 6 erfasst. Der Steuerrechner 1 nimmt diese Werte in einem Schritt S8 entgegen.

In einem Schritt S9 ermittelt der Steuerrechner 1 neue Werte für die Korrekturfaktoren $s_k$. In einem Schritt S10 adaptiert der Steuerrechner 1 das Modell 9, d. h. er übernimmt die neu ermittelten Werte der Korrekturfaktoren $s_k$ als für alle neuen Berechnungen gültige Werte.

Weiterhin kann ein Schritt S11 vorhanden sein, in dem der Steuerrechner 1 die Isttemperaturen T2 und Istgeometrien G2 der bereits in der Fertigstraße befindlichen Bandpunkte 6 nachführt bzw. korrigiert. Der Schritt S11 kann jedoch alternativ entfallen, da es im Rahmen der vorliegenden Erfindung nicht darauf ankommt, ob die Istgeometrie G2 und die Isttemperatur T2 tatsächlich nachgeführt werden. Entscheidend ist, dass die Möglichkeit hierzu besteht, also die Nachführbarkeit gegeben ist.

In einem Schritt S12 löscht der Steuerrechner 1 den ausgelaufenen Bandpunkt 6 aus der Gesamtheit an verwalteten Bandpunkten 6.

In einem Schritt S13 prüft der Steuerrechner 1, ob ein neuer Bandpunkt 6 in die Fertigstraße einläuft. Je nach Ergebnis der Prüfung geht der Steuerrechner 1 zum Schritt S1 oder zum Schritt S4 zurück.

Die Schritte S7 und S13 sind stets erforderlich, also nicht nur dann, wenn der Abstand a der Bandpunkte 6 voneinander als geometrischer Abstand oder als zwischen den Bandpunkten 6 befindliche Masse bestimmt ist. Die Schritte S7 und S13 sind auch dann erforderlich, wenn der Abstand a der Bandpunkte 6 voneinander durch den Zeittakt T bestimmt ist, das Verfahren von FIG 3 also nicht nur zyklisch, sondern sogar getaktet ausgeführt wird. Denn wenn die ersten Bandpunkte 6, also der Bandkopf, in die Fertigstraße 6 einlaufen, laufen noch keine Bandpunkte 6 aus der Fertigstraße aus. Umgekehrt laufen die letzten Bandpunkte 6, also der Bandfuß, erst lange nachdem die letzten Bandpunkte 6 in die Fertigstraße eingelaufen sind, wieder aus der Fertigstraße aus.

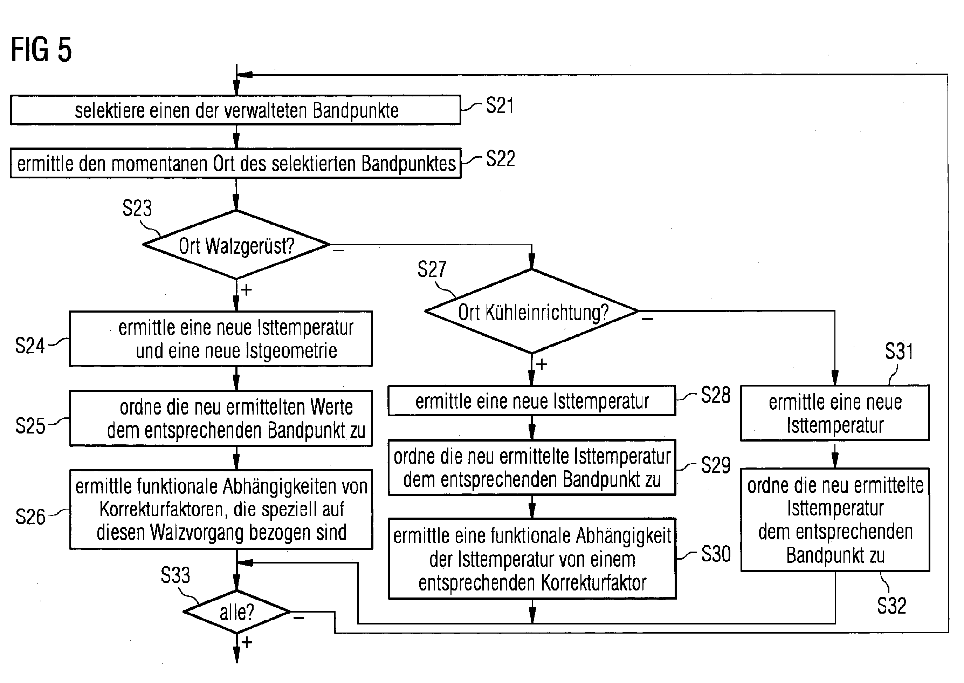

Nachfolgend wird in Verbindung mit FIG 5 der Schritt S5 von FIG 3, also die Ermittlung der neuen Isttemperaturen T2 und Istgeometrien G2 erläutert.

Gemäß FIG 5 selektiert der Steuerrechner 1 in einem Schritt S21 einen der verwalteten Bandpunkte 6. In einem Schritt S22 ermittelt der Steuerrechner 1 den momentanen Ort des selektierten Bandpunktes 6. Zur Ausführung des Schritts S22 wird - selbstverständlich - die Wegverfolgung benötigt und verwendet.

In einem Schritt S23 prüft der Steuerrechner 1, ob der selektierte Bandpunkt 6 sich gerade am Ort eines der Walzgerüste F1...F6 befindet. Wenn dies der Fall ist, ermittelt der Steuerrechner 1 in einem Schritt S24 - selbstverständlich unter Berücksichtigung der vorherigen Isttemperaturen T2 und der vorherigen Istgeometrien G2, der Temperaturbeeinflussung $\delta$T durch den entsprechenden Walzvorgang und der Geometriebeeinflussung $\delta$G durch den entsprechenden Walzvorgang - eine neue Isttemperatur T2 und eine neue Istgeometrie G2. Der Steuerrechner 1 ordnet die neu ermittelten Werte T2, G2 in einem Schritt S25 dem entsprechenden Bandpunkt 6 zu. Weiterhin ermittelt der Steuerrechner 1 in einem Schritt S26 zusätzlich zu etwaigen schon vorhandenen funktionalen Abhängigkeiten weitere funktionale Abhängigkeiten von Korrekturfaktoren $s_k$, die speziell auf diesen Walzvorgang und damit auf das entsprechende Walzgerüst F1...F6, das diesen Walzvorgang bewirkt, bezogen sind. Die funktionalen Abhängigkeiten beziehen sich insbesondere auf die Abhängigkeit der Istgeometrie G2 von den Korrekturfaktoren $s_k$. Zusätzlich können auch funktionale Abhängigkeiten von temperaturbezogenen Korrekturfaktoren ermittelt werden.

Wenn der selektierte Bandpunkt 6 sich nicht am Ort eines der Walzgerüste F1...F6 befindet, prüft der Steuerrechner 1 in einem Schritt S27, ob der selektierte Bandpunkt 6 sich am Ort einer Zwischengerüstkühleinrichtung 8 befindet. Wenn dies der Fall ist, ermittelt der Steuerrechner 1 in einem Schritt S28 unter Berücksichtigung der Isttemperatur T2, der Istgeometrie G2 und der Temperaturbeeinflussung $\delta$T durch die entsprechende Zwischengerüstkühleinrichtung 8 die neue Isttemperatur T2 des entsprechenden Bandpunktes 6. Weiterhin ordnet er in einem Schritt S29 die neu ermittelte Isttemperatur T2 dem entsprechenden Bandpunkt 6 zu. Die Istgeometrie G2 muss nicht neu ermittelt werden, da sie sich nicht ändert. Denn am Ort der Zwischengerüstkühleinrichtung 8 erfolgt keine Geometriebeeinflussung. Soweit erforderlich, ermittelt der Steuerrechner 1 in einem Schritt S30 weiterhin eine funktionale Abhängigkeit der Isttemperatur T2 von einem entsprechenden Korrekturfaktor.

Wenn der selektierte Bandpunkt 6 sich weder am Ort eines der Walzgerüste F1...F6 noch am Ort einer Zwischengerüstkühleinrichtung 8 befindet, kann in einem Schritt S31 unter Berücksichtigung der Istgeometrie G2 und der Isttemperatur T2 in Verbindung mit der Luftkühlung eine neue Isttemperatur T2 ermittelt werden. In diesem Fall ordnet der Steuerrechner 1 die neu ermittelte Isttemperatur T2 dem entsprechenden Bandpunkt 6 in einem Schritt S32 zu. Die Schritte S31 und S32 können jedoch alternativ entfallen, da die Luftkühlung in manchen Fällen vernachlässigbar gering ist.

In einem Schritt S33 prüft der Steuerrechner 1, ob er die neue Isttemperatur T2 und ggf. die neue Istgeometrie G2 sowie - soweit erforderlich - die funktionalen Abhängigkeiten von Korrekturfaktoren $s_k$ bereits für alle verwalteten Bandpunkte 6 ermittelt hat. Wenn dies der Fall ist, ist die Vorgehensweise von FIG 5 beendet. Anderenfalls geht der Steuerrechner 1 zum Schritt S21 zurück. Bei der erneuten Ausführung des Schrittes S21 selektiert der Steuerrechner 1 selbstverständlich einen anderen Bandpunkt 6, dessen Isttemperatur T2 und ggf. auch Istgeometrie G2 er noch nicht aktualisiert hat.

Gemäß FIG 5 gilt also:

- Durchläuft ein Bandpunkt 6 eine Temperaturbeeinflussungseinrichtung (beispielsweise ein Walzgerüst F1...F6 oder eine Zwischengerüstkühleinrichtung 8), wird der Momentanwert der Temperaturbeeinflussung $\delta T$ erfasst und im Modell 9 der Fertigstraße berücksichtigt.
- Durchläuft der Bandpunkt 6 ein Gerüst F1...F6, wird anhand der Momentanwerte des Gerüstes F1...F6, d.h. der gemessenen Walzkraft $F_w$, der Züge $F_e$, $F_a$, der Anstellung s, der Walzenumfangsgeschwindigkeit v usw. anhand des Walzkraftmodells 9 eine Austrittsdicke $h_a$ des Bandpunktes 6, eine erwartete Walzkraft F und eine Voreilung k berechnet, iteriert, bis die erwartete Walzkraft F mit dem Messwert $F_w$ übereinstimmt, und zumindest die Austrittsdicke $h_a$, ggf. auch noch weitere Werte, bei dem Bandpunkt 6 abgespeichert.

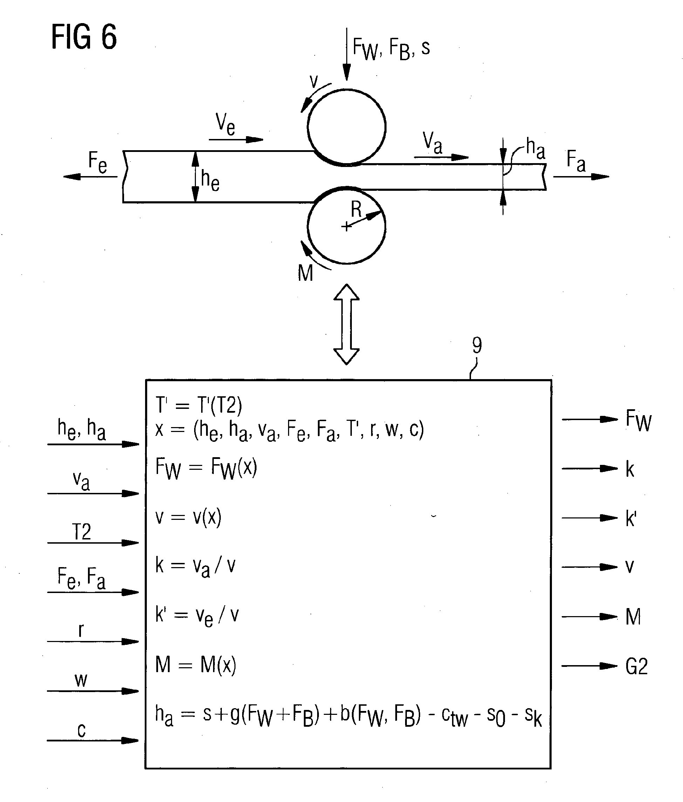

Nachfolgend wird in Verbindung mit den FIG 6, 7 und 8 der Schritt S6 von FIG 3, also das Ermitteln der funktionalen Abhängigkeiten, näher erläutert.

Beim Durchlaufen der Walzgerüste F1 bis F6 erfolgt ein Walzen des Metall-Warmbandes 5. FIG 6 zeigt eines der Walzgerüste F1...F6. Gemäß FIG 6 soll mittels des Modells 9 der Fertigstraße für das jeweilige Gerüst F1...F6 die Walzkraft $F_w$ als Funktion der Eintrittsdicke $h_e$, der Austrittsdicke $h_a$, der Austrittsgeschwindigkeit $v_a$, des Zugs $F_e$ auf der Eintrittsseite, des Zugs $F_a$ auf der Austrittsseite, der Durchschnittstemperatur T' des Materials (über Dicke und ggf. Breite und/oder evtl. auch Länge), der Materialhärte r = r (Phi, Chemie), Phi der Umformgrad aus vorgelagerten Gerüsten, der nicht bereits durch Rekristallisation abgebaut ist, und eines eventuell vorhandenen Schmiermittelstroms w ermittelt werden. Weiterhin soll das Modell 9 adaptierbar sein, d. h. es wird ein Korrekturfaktor c eingeführt. Damit schreibt man

$$F_w = f_1(h_e,\ h_a,\ v_a,\ F_e,\ F_a,\ T',\ r,\ w,\ c) \qquad (1)$$

Die genannten Größen sind selbstverständlich auf das jeweilige Walzgerüst F1...F6 bezogen.

Die unabhängigen Eingangsvariablen ($h_e$, $h_a$, $v_a$, $F_e$, $F_a$, T', r, w, c) können zu einem Vektor x zusammengefasst werden.

In dem Modell 9 ist die Walzenumfangsgeschwindigkeit v ebenfalls eine Funktion der genannten Eingangsvariablen, d. h.

$$v = f_2(x) \qquad (2)$$

Die sogenannte Voreilung k berechnet sich hieraus leicht gemäß k = $v_a$/v. In analoger Weise ergibt sich die Nacheilung k' zu k'= $v_e$/v.

Ebenso ist das Gerüstdrehmoment M eine Funktion der genannten Eingangsvariablen, d. h.

$$M = f_3(x) \qquad (3)$$

Die Eintrittsgeschwindigkeit $v_e$ lässt sich ohne weiteres mittels der Massenflussbilanz $h_a v_a = h_e v_e$ berechnen.

Für das betrachtete Gerüst F1...F6 gilt für die Auslaufdicke $h_a$ folgende Gleichung:

$$h_a = s + g(F_w + F_B) + b(F_w,\ F_B) - c_{tw} - s_0 - s_k \qquad (4)$$

Dabei bezeichnet s die Anstellung des betrachteten Gerüstes F1...F6, g eine Funktion für die nichtlineare Gerüstfederkennlinie, $F_B$ die Biegekraft, die zur Walzkraft $F_w$ addiert werden muss, um die gesamte Gerüstkraft zu erhalten, b eine Funktion, die das Biegemodell beschreibt, in das die Walzkraft $F_w$ und die Biegekraft $F_B$ eingehen, $c_{tw}$ einen Beitrag aufgrund der thermischen Balligkeit infolge der internen Temperaturverteilung in der Walze und des Walzenverschleißes, $s_0$ den Nullpunkt, der durch eine Kalibrierung des Gerüstes F1...F6 durch Zusammenfahren der Walzen ohne Band ermittelt wird, und $s_k$ die Nullpunktkorrektur, die im Stand der Technik aus stationären Überlegungen im ersten Schritt der Nachberechnung ermittelt wird.

Die vom betreffenden Walzgerüst F1...F6 am Warmband 5 verrichtete mechanische Leistung P ist durch P = Mv/R gegeben, wobei R den Walzenradius bezeichnet. Diese Leistung besteht aus den Anteilen $F_e v_e$, $-F_a v_a$, einem Reibanteil, der durch Reibung zwischen Walze und Material während der Umformung entsteht und teilweise die Bandoberfläche erwärmt, teilweise aber auch die Walzenoberfläche erhitzt, und einem dazu vergleichsweise großen Anteil an Umformarbeit, der ausschließlich das Warmband 5 erhitzt.

Dies ist die Basis der Modellierung. Beim Biegemodell wird ggf. auch eine Walzenverschiebung berücksichtigt, die über den Schliff der Walze zur Funktion b beiträgt. Der genaue Aufbau der Modelle ist dem Fachmann bekannt und vertraut.

Nachfolgend wird ein einzelner Bandpunkt 6 während seines Durchlaufs durch die Fertigstraße betrachtet. Weiterhin wird im Rahmen der nachfolgenden Ausführungen nur auf die Geometrie des betrachteten Bandpunktes 6 und die Beeinflussung der Geometrie näher eingegangen. Bezüglich der Temperatur werden zwar ähnliche Vorgehensweisen ergriffen. Für die Temperatur ist die entsprechende Vorgehensweise jedoch bereits aus der DE 101 56 008 A1 bekannt, so dass ein detailliertes Eingehen hierauf nicht erforderlich ist.

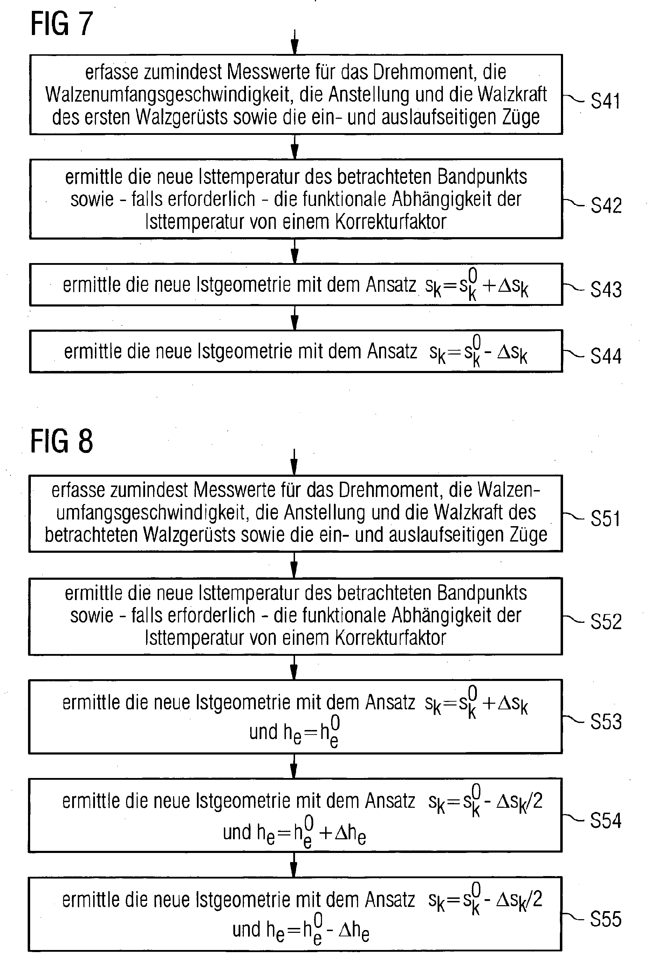

Wenn der betrachtete Bandpunkt 6 das erste Walzgerüst F1 durchläuft, werden gemäß FIG 7 in einem Schritt S41 Messwerte für das Drehmoment M, die Walzenumfangsgeschwindigkeit v, die Anstellung s und die Walzkraft $F_w$ des ersten Walzgerüsts F1 erfasst. Weiterhin werden die ein- und auslaufseitigen Züge $F_e$, $F_a$ erfasst. Soweit erforderlich, werden zusätzlich eine Biegekraft $F_B$ und eine Walzenverschiebung erfasst.

In einem Schritt S42 erfolgt eine Ermittlung der neuen Isttemperatur T2 des betrachteten Bandpunkts 6 sowie - falls erforderlich - eine Ermittlung der funktionalen Abhängigkeit der Isttemperatur T2 von einem Korrekturfaktor. Dies wird nachfolgend nicht näher ausgeführt, da die entsprechende Vorgehensweise, wie bereits erwähnt, bereits bekannt ist. Die Schritte S41 und S42 entsprechen somit - soweit es die Temperatur betrifft - den Schritten S24 und S26 von FIG 5.

In Schritten S43 und S44 werden mehrere - vorliegend zwei - Istgeometrien G2 des betreffenden Bandpunktes 6 ermittelt, die für den betrachteten Bandpunkt 6 hinter dem ersten Walzgerüst F1 erwartet werden (ergänze: könnten).

Beispielsweise weist die Nullpunktkorrektur $s_k$ des ersten Walzgerüsts F1 zu dem Zeitpunkt, zu dem der betrachtete Bandpunkt 6 im ersten Walzgerüst F1 gewalzt wird, einen aktuellen Wert $s_k^0$ auf. Die Anfangsdicke d0 des einlaufenden Bandpunktes 6 ist bekannt. Die funktionalen Abhängigkeiten von der Nullpunktkorrektur $s_k$ des ersten Walzgerüsts F1 können beispielsweise dadurch ermittelt werden, dass die Auslaufdicke $h_a$ für zwei Werte der Nullpunktkorrektur $s_k$ ermittelt wird, wobei die beiden Werte der Nullpunktkorrektur $s_k$ nahe beieinander liegen, aber voneinander verschieden sind und in der Nähe der aktuellen Nullpunktkorrektur $s_k^0$ für das erste Walzgerüst F1 liegen. Beispielsweise können die beiden verwendeten Werte die aktuelle Nullpunktkorrektur $s_k^0$ und eine anderer Wert sein, der um eine Abweichung $\Delta s_k$ größer oder kleiner ist. Vorzugsweise jedoch ist gemäß den Schritten S43 und S44 je einer der herangezogenen Werte größer und kleiner als der aktuelle Wert $s_k^0$ der Nullpunktkorrektur $s_k$ des ersten Walzgerüsts F1. Die Werte, für welche die Schritte S43 und S44 tatsächlich ausgeführt werden, umgeben daher vorzugsweise den aktuellen Wert $s_k^0$.

Beim ersten Walzgerüst F1, bei dem - zumindest in der Regel - nur eine einzige funktionale Abhängigkeit (nämlich die von der Nullpunktkorrektur $s_k^0$ des ersten Walzgerüsts F1) ermittelt werden muss, reicht es aus, dass die funktionale Abhängigkeit dadurch bestimmt wird, dass für eine Anzahl (nämlich 2) von "Tupeln" des Korrekturfaktors $s_k$ jeweils die sich für den jeweiligen "Tupel" ergebenden erwarteten Größen ermittelt werden. Die Anzahl an "Tupeln" (nämlich 2) ist um 1 größer als die Anzahl von Korrekturfaktoren $s_k$ (nämlich 1). Durch diese Linearisierung im Arbeitspunkt ist es möglich, dass die neuen Istgeometrien G2 der erfassten Bandpunkte 6 später durch Interpolation oder Extrapolation ermittelt werden.

Das Wort "Tupel" ist in obigen Ausführungen deshalb in Anführungszeichen gesetzt, weil die "Tupel" die Höhe "1" aufweisen, also entartet sind.

Man nehme nun an, ein anderer Bandpunkt 6 laufe aus der Fertigstraße 1 aus. Dessen tatsächliche Istgeometrie G3 wird erfasst. Die Nullpunktkorrektur $s_k$ des ersten Walzgerüsts F1 wird daher nachgeführt. Aufgrund des Umstandes, dass in den Schritten S43 und S44 eine Linearisierung im Arbeitspunkt vorgenommen wurde, kann die Istgeometrie G2 des erstgenannten Bandpunktes 6 hinter dem ersten Walzgerüst F1 bei jeder neuen Vorgabe eines neuen Wertes für die Nullpunktkorrektur $s_k$ des ersten Walzgerüsts F1 ohne Weiteres mittels einer (linearen) Interpolation oder Extrapolation nachgeführt bzw. ermittelt werden.

Nun wird bezüglich des erstgenannten Bandpunktes 6 ein (beliebiges) anderes Walzgerüst F2...F6 betrachtet. Es kann sich hierbei um ein beliebiges Walzgerüst F2...F6 der Fertigstraße mit Ausnahme des ersten Walzgerüsts F1 der Fertigstraße handeln. Rein beispielhaft wird das dritte Walzgerüst F3 der Fertigstraße betrachtet.

Bei diesem Walzgerüst F3 liegt im Prinzip die gleiche Situation vor wie beim ersten Walzgerüst F1. Auch für das zweite, dritte usw. Walzgerüst F2, F3, ... der Fertigstraße müssen daher - analog zum ersten Walzgerüst F1 der Fertigstraße - funktionale Abhängigkeiten von einer Anzahl von Korrekturfaktoren ermittelt werden, die die Modellierung des jeweiligen Walzgerüsts F2, F3, ... beeinflussen. Beispielsweise kann auch hier wieder die Nullpunktkorrektur $s_k$ der Korrekturfaktor sein.

Zusätzlich muss jedoch berücksichtigt werden, dass für das zweite, dritte usw. Walzgerüst F2, F3, ... der Fertigstraße die dortigen Einlaufdicken $h_e$ des betrachteten Bandpunktes 6 nicht ohne Weiteres als bekannt vorausgesetzt werden dürfen. Zusätzlich muss bei den anderen Walzgerüsten F2, F3, ... der Fertigstraße daher eine weitere funktionale Abhängigkeit von einem Parameter ermittelt werden, der seinerseits von der Gesamtheit der Modellierung derjenigen Walzgerüste F1...F5 abhängig ist, die dem betrachteten Walzgerüst F2...F6 vorgeordnet sind. Beispielsweise muss beim dritten Walzgerüst F3 der zusätzliche Parameter von der Modellierung des ersten und des zweiten Walzgerüsts F1, F2 der Fertigstraße abhängen. Dies wird nachfolgend in Verbindung mit FIG 8 näher erläutert.

FIG 8 enthält Schritte S51 und S52. Die Schritte S51 und S52 sind auf das betrachtete andere Walzgerüst F2, F3, ... bezogen, entsprechen im Übrigen aber den Schritten S41 und S42 von FIG 7.

Weiterhin enthält FIG 8 Schritte S53 bis S55. Die Schritte S53 bis S55 entsprechen vom Ansatz her den Schritten S43 und S44 von FIG 7. Im Unterschied zu FIG 7 wird im Rahmen von FIG 8 jedoch eine funktionale Abhängigkeit mehr ermittelt als in FIG 7. Es wird - beispielsweise - zum einen eine funktionale Abhängigkeit von der Nullpunktkorrektur $s_k$ des betrachteten Walzgerüsts F2...F6 ermittelt, zum anderen eine weitere funktionale Abhängigkeit von einem Parameter, der von der Gesamtheit der Modellierung der dem betrachteten Walzgerüst F2...F6 vorgeordneten Walzgerüste F1...F5 abhängig ist. Es bietet sich insbesondere an, als weiteren Parameter die Einlaufdicke $h_e$ des betrachteten Walzgerüsts F2...F6 heranzuziehen, also diejenige Dicke, mit welcher der betrachtete Bandpunkt 6 aus dem unmittelbar vorgeordneten Walzgerüst F1...F5 ausgelaufen ist.

Auch im Rahmen von FIG 8 werden somit die funktionalen Abhängigkeiten dadurch bestimmt, dass für eine Anzahl von Tupeln der Korrekturfaktoren $s_k$, $h_e$ (beide bezogen auf das jeweilige Walzgerüst F2...F6) jeweils die sich für den jeweiligen Tupel ergebenden erwarteten Größen (beispielsweise die Walzkraft $F_w$ und die Auslaufdicke $h_a$) ermittelt werden. Die Anzahl von Tupeln (nämlich 3) ist hierbei eins größer als die Anzahl von Korrekturfaktoren (nämlich 2). Das Wort "Tupel" wurde nunmehr ohne Anführungszeichen verwendet, weil es sich um "echte" Tupel mit einer Höhe von mindestens zwei handelt.

Die Schritte S53 bis S55 werden nachfolgend nochmals erläutert.

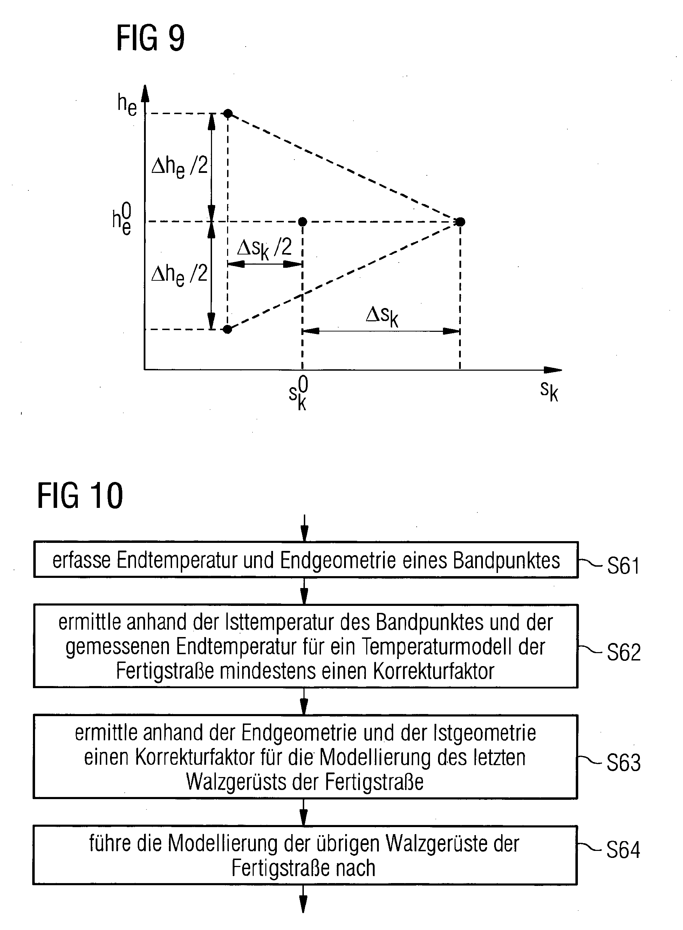

Man nehme an, zu dem Zeitpunkt, zu dem der betrachtete Bandpunkt 6 in dem betrachteten anderen Walzgerüst F2...F6 gewalzt wird, weise die dortige Nullpunktkorrektur $s_k$ den aktuellen Wert $s_k^0$ auf und es werde weiterhin als Einlaufdicke $h_e$ die aktuelle Einlaufdicke $h_e^0$ erwartet. In diesem Fall kann in den Schritten S53 bis S55 (beispielsweise) jeweils die Auslaufdicke $h_a$ ermittelt werden, die für die Wertekombinationen $(s_k^0, h_e^0)$, $(s_k^0+\Delta s_k, h_e^0)$ und $(s_k^0, h_e^0+\Delta h_e)$ erwartet wird. Vorzugsweise jedoch werden entsprechend der Darstellung von FIG 8 die Tupel derart bestimmt, dass sie das aktuelle Wertetupel $(s_k^0, h_e^0)$ umgeben. Die in FIG 8 angegebenen Werte sind jeweils nur rein beispielhaft. Die symmetrische Anordnung der Tupel um das aktuelle Wertetupel herum - siehe FIG 9 - ist jedoch bevorzugt, wenn auch nicht zwingend.

Nachfolgend wird in Verbindung mit FIG 10 die Adaption des Modells 9, also der Schritt S10 von FIG 3, näher erläutert.

Es sei angenommen, dass ein bestimmter Bandpunkt 6 aus der Fertigstraße ausläuft und seine tatsächliche Endtemperatur T3 und seine Endgeometrie G3 messtechnisch erfasst werden, siehe der Schritt S61 von FIG 10, der dem Schritt S8 von FIG 3 entspricht.

In einem Schritt S62 wird sodann anhand der (modellgestützt ermittelten, erwarteten) Isttemperatur T2 des entsprechenden Bandpunktes 6 und der gemessenen Endtemperatur T3 für ein Temperaturmodell 9' der Fertigstraße mindestens ein entsprechender Korrekturfaktor ermittelt. Das Temperaturmodell 9' der Fertigstraße ist ein Teil des Modells 9 der Fertigstraße. Der Schritt S62 ist als solcher bekannt - siehe die bereits mehrfach genannte DE 101 56 008 A1 - und bedarf daher keiner näheren Erläuterung.

In einem Schritt S63 wird sodann anhand der Endgeometrie G3 und der (modellgestützt ermittelten, erwarteten) Istgeometrie G2 direkt und unmittelbar der Korrekturfaktor $s_k$ für die Modellierung des letzten Walzgerüsts F6 der Fertigstraße nachgeführt. Insbesondere kann beispielsweise die Nullpunktkorrektur $s_k$ des letzten Walzgerüsts F6 der Fertigstraße ermittelt und im Sinne einer Reduzierung des Modellfehlers nachgeführt werden.

In einem Schritt S64 erfolgt sodann ein Nachführen der Modellierung der übrigen Walzgerüste F1...F5 der Fertigstraße. Beispielsweise wird in Verbindung mit den gemessenen Walzenumfangsgeschwindigkeiten v der Walzgerüste F1...F6, der modellierten Voreilungen k der Walzgerüste F1...F6 und der modellierten Nacheilungen k' der Walzgerüste F1...F6 in Verbindung mit der Massenflusserhaltung an den betrachteten Walzgerüsten F1...F6, die jeweilige Einlaufdicke $h_e$ des betrachteten Bandpunktes 6 in das betrachtete Walzgerüst F1...F6 ermittelt. Durch diese Vorgehensweise kann - ohne eine weitere Messgröße zu benötigen - die jeweilige Nullpunktkorrektur $s_k$ der anderen Walzgerüste F1...F5 nachgeführt werden.

Noch besser ist es, wenn im Rahmen des Modells 9 auch erwartete gepufferte Bandlängen oder deren Änderungen ermittelt werden, also diejenigen Bandlängen, die zwischen den einzelnen Walzgerüsten F1...F6 gepuffert werden. In diesem Fall ist es möglich, die Korrekturfaktoren $s_k$ für die Modellierung der Walzgerüste F1...F5 der Fertigstraße - also nicht des letzten Walzgerüsts F6 - durch das Modell 9 unter Verwendung auch der gepufferten Bandlängen oder deren Änderungen zu ermitteln. Die Bandlängen oder deren Änderungen können insbesondere im Rahmen des Modells 9 der Fertigstraße anhand der Walzenumfangsgeschwindigkeiten v und der erwarteten Vor- und Nacheilungen k, k' ermittelt werden.

Beispielsweise können - siehe FIG 4 - zwischen den Walzgerüsten F1...F6 Schlingenheber 10 angeordnet sein, so dass tatsächlich gepufferte Bandlängen unter Berücksichtigung der Stellung und in Grenzen von der Anstellkraft der Schlingenheber 10 bestimmbar sind. Die gepufferten Bandlängen oder deren Änderungen können beispielsweise verwendet werden, um die im Rahmen des Schrittes S64 ermittelten Einlaufgeschwindigkeiten $v_e$ eines Walzgerüsts F2...F6 in die Auslaufgeschwindigkeit $v_a$ des vorgeordneten Walzgerüsts F1...F5 umzurechnen. In diesem Fall kann jeweils ein Korrekturfaktor (beispielsweise für die Nullpunktkorrektur $s_k$) für je eines der vorgeordneten Walzgerüste F1...F5 unter Berücksichtigung der jeweils erwarteten gepufferten Bandlänge oder deren Änderung ermittelt werden.

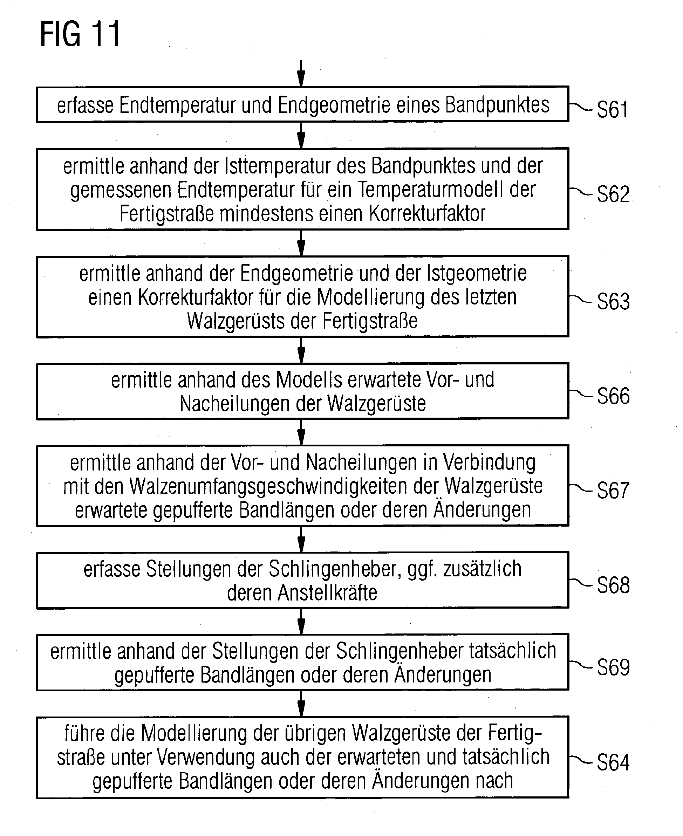

Die Ermittlung der erwarteten gepufferten Bandlängen oder deren Änderungen zeigt FIG 11. Die gegenüber FIG 10 zusätzlichen Schritte S66 bis S69 sind selbsterklärend, so dass nachfolgend von weiteren Ausführungen zu den Schritten S66 bis S69 abgesehen wird.

Die Berücksichtigung der gepufferten Bandlängen oder deren Änderungen ist insbesondere deshalb von Vorteil, weil dadurch auch für den Fall eines Dickenkeils, im Falle von Lastumverteilungen und bei dynamischen Vorgängen korrekte Korrekturwerte für alle Gerüstanstellungen ermittelt werden können.

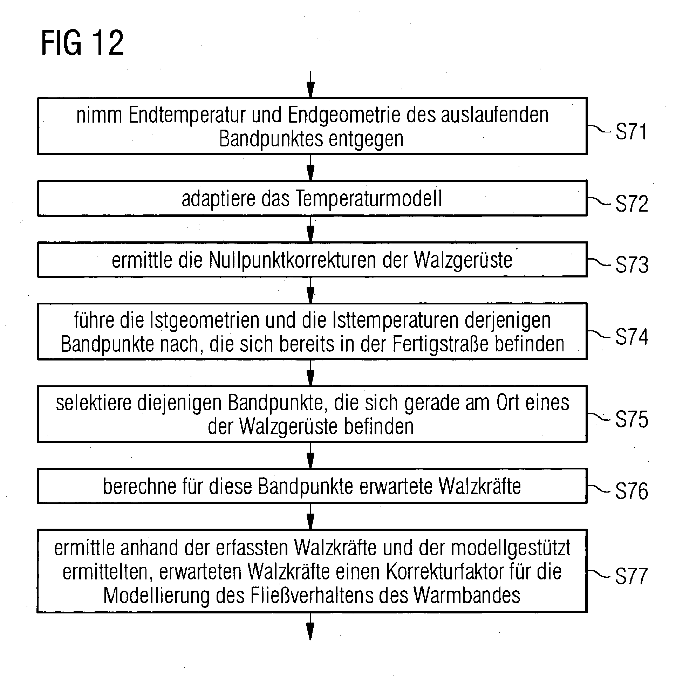

Soweit bisher erläutert, werden die Modelle der einzelnen Walzgerüste F1...F6 insbesondere bezüglich derjenigen Korrekturfaktoren adaptiert, mittels derer die Nullpunktkorrektur $s_k$ der einzelnen Walzgerüste F1...F6 festgelegt wird. In vielen Fällen ist bereits durch diese Vorgehensweise eine gute Modelladaption möglich. Die Vorgehensweise ist jedoch verbesserungsfähig. Dies wird nachfolgend in Verbindung mit FIG 12 näher erläutert.

Gemäß FIG 12 nimmt der Steuerrechner 1 in einem Schritt S71 bezüglich des auslaufenden Bandpunktes 6 dessen Endtemperatur T3 und dessen Endgeometrie G3 entgegen. In einem Schritt S72 adaptiert der Steuerrechner 1 das Temperaturmodell 9', d. h. er führt den Korrekturfaktor (bzw. die Korrekturfaktoren) für das Temperaturmodell 9' nach. In einem Schritt S73 ermittelt der Steuerrechner 1 die Nullpunktkorrekturen $s_k$ der Walzgerüste F1...F6. Die Schritte S71 bis S73 entsprechen damit den Vorgehensweisen, die obenstehend in Verbindung mit den FIG 10 und 11 erläutert wurden.

In einem Schritt S74 führt der Steuerrechner 1 die Istgeometrien G2 und die Isttemperaturen T2 derjenigen Bandpunkte 6 nach, die sich bereits in der Fertigstraße befinden.

In einem Schritt S75 selektiert der Steuerrechner 1 diejenigen Bandpunkte 6, die sich gerade am Ort eines der Walzgerüste F1...F6 befinden. Für diese Bandpunkte 6 berechnet der Steuerrechner 1 in einem Schritt S76 erwartete Walzkräfte, also diejenigen Walzkräfte, die gemäß Gleichung 1 für die aktualisierten Werte der Ein- und Auslaufdicken $h_e$, $h_a$ erwartet wurden.

Wie bereits erwähnt, werden die (tatsächlich auftretenden) Walzkräfte $F_w$ erfasst. Es ist daher möglich, in einem Schritt S77 nach dem Korrigieren der Nullpunkte $s_k$ der Walzgerüste F1...F6 anhand der erfassten Walzkräfte $F_w$ und der modellgestützt ermittelten, erwarteten Walzkräfte den Korrekturfaktor c für die Modellierung des Fließverhaltens des Warmbandes 5 zu ermitteln. Es kann also beispielsweise der Koeffizient c nachgeführt werden.

Es ist möglich, den Korrekturfaktor c einheitlich für alle Walzgerüste F1...F6 der Fertigstraße zu bestimmen. Alternativ ist es möglich, den Korrekturfaktor c individuell für jedes einzelne Walzgerüst F1...F6 zu ermitteln. Auch eine Gruppenbildung - beispielsweise die Walzgerüste F1 und F2 einerseits und die Walzgerüste F3...F6 andererseits - ist möglich.

Wie bereits erwähnt, sind zwischen den Walzgerüsten F1...F6 oftmals Schlingenheber 10 angeordnet. In diesem Fall ist es möglich, mittels der Schlingenheber 10 Istgeschwindigkeiten v' zu erfassen, mit denen das Warmband 5 den jeweiligen Schlingenheber 10 passiert. Die Istgeschwindigkeiten v' können - ggf. in Verbindung mit den gepufferten Bandlängen und insbesondere deren Änderungen - zur messwertgestützten Ermittlung der Einlaufgeschwindigkeiten $v_e$ des nachgeordneten Walzgerüsts F1...F6 und/oder der Auslaufgeschwindigkeit $v_a$ des vorgeordneten Walzgerüstes F1...F5 verwendet werden.

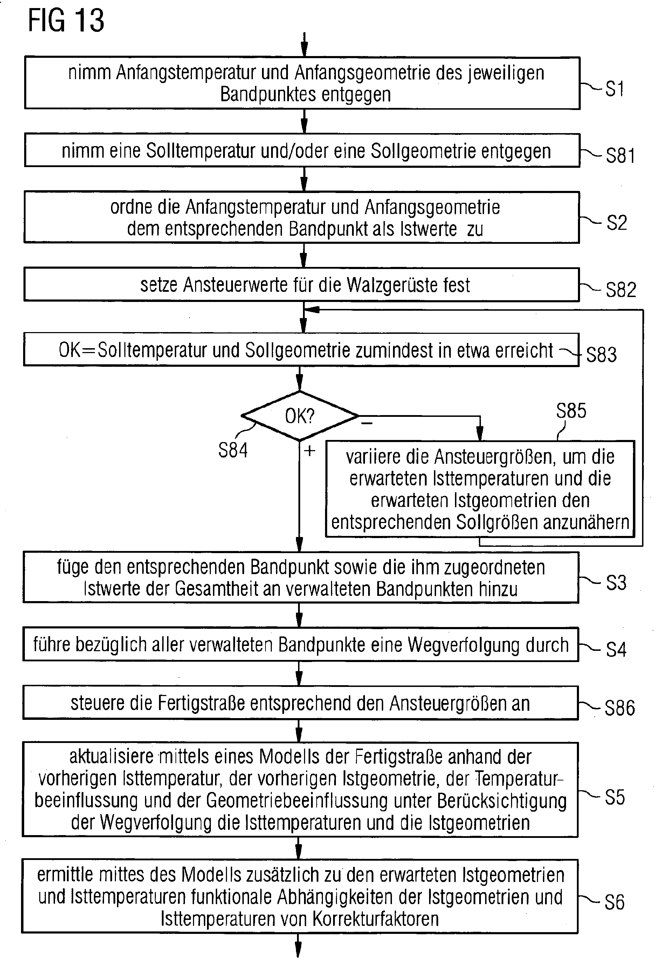

Soweit bisher erläutert, ist das erfindungsgemäße Verfahren ein reines Ermittlungsverfahren. Steuerungseingriffe erfolgen (noch) nicht. Es reicht - soweit bisher beschrieben - beispielsweise aus, die ermittelten Isttemperaturen T2 und Istgeometrien G2 an einen Bediener 11 der Fertigstraße auszugeben. Vorzugsweise ist die erfindungsgemäße Vorgehensweise jedoch in die Ermittlung von Ansteuersignalen A für die Fertigstraße eingebunden. Dies wird nachfolgend in Verbindung mit FIG 13 näher erläutert.

FIG 13 zeigt zunächst die Schritte S1 bis S6 von FIG 3. Zusätzlich zeigt FIG 13 Schritte S81 bis S86.

Im Schritt S81 nimmt der Steuerrechner 1 eine Solltemperatur T* und/oder eine Sollgeometrie G* entgegen. Es ist möglich, dass die Solltemperatur T* und/oder die Sollgeometrie G* für alle Bandpunkte 6 dieselben sind. In diesem Fall kann der Schritt S81 vor dem Schritt S1 ausgeführt werden, so dass eine einmalige Vorgabe für alle Bandpunkte 6 erfolgt. Aufgrund der Anordnung des Schrittes S81 nach dem Schritt S1 und vor dem Schritt S3 (ob vor oder nach dem Schritt S2 ist nebensächlich) ist es jedoch möglich, die Solltemperatur T* und/oder die Sollgeometrie G* den einzelnen Bandpunkten 6 individuell zuzuordnen.

Die Solltemperatur T* kann ein einzelner Temperaturwert sein. Beispielsweise kann die Solltemperatur T* angeben, welche Temperatur am Auslauf der Fertigstraße erreicht werden soll. Vorzugsweise wird jedoch ein Temperaturverlauf vorgegeben, also eine Funktion der Solltemperatur in Abhängigkeit von dem Ort des jeweiligen Bandpunktes 6 in der Fertigstraße oder in Abhängigkeit von der Zeit. Insbesondere die Vorgabe eines zeitlichen Temperaturverlaufs ist vorteilhaft.

In analoger Weise kann auch die Sollgeometrie G* als einzelner Wert - insbesondere im Sinne einer gewünschten Endgeometrie - vorgegeben sein. Vorzugsweise ist jedoch auch für die Sollgeometrie G* ein entsprechender Verlauf vorgegeben. In diesem Fall ist für mehrere der Walzgerüste F1...F6 - insbesondere jedes der Walzgerüste F1...F6 - vorgegeben, welche auslaufseitige Geometrie der entsprechende Bandpunkt 6 hinter dem jeweiligen Walzgerüst F1...F6 aufweisen soll.

Im Schritt S82 setzt der Steuerrechner 1 die Ansteuersignale A für die Walzgerüste F1...F6 (und ggf. auch für die Zwischengerüstkühleinrichtungen 8) fest. In den Schritten S83 und S84 prüft der Steuerrechner 1, ob mit den angesetzten Ansteuersignalen A die gewünschte Solltemperatur T* und die gewünschte Sollgeometrie G* voraussichtlich und zumindest in etwa erreicht werden. Wenn dies nicht der Fall ist, geht der Steuerrechner 1 zum Schritt S85 über, in dem er die Ansteuersignale A variiert, um die erwarteten Isttemperaturen T2 und die erwarteten Istgeometrien G2 den entsprechenden Sollgrößen T*, G* anzunähern. Weiterhin steuert der Steuerrechner 1 im Schritt S86 die Fertigstraße entsprechend den ermittelten Ansteuersignalen A an.

Aufgrund der vorliegenden Erfindung ist es daher möglich, nicht nur das Temperaturmodell 9' der Fertigstraße und die Isttemperatur T2, sondern auch das Walzkraftmodell eines jeden Gerüstes F1...F6 in Echtzeit, also noch während der Bandpunkt 6 durch die Fertigstraße läuft, zu korrigieren. Diese Korrekturberechnungen werden nicht wertlos, wenn während des weiteren Durchlaufs des Bandpunktes 6 weitere Verbesserungen für die Anstellungskorrekturen $s_k$ eines jeden Gerüstes F1...F6 bekannt werden, sondern lassen sich ihrerseits noch nachkorrigieren. Erreicht der Bandpunkt 6 die Dickenmessung, liegt eine vergleichbar gute Korrektur vor, als ob man die gesamten Korrekturen erst mit Erreichen der Dickenmessung vorgenommen hätte, obwohl zu diesem Zeitpunkt keine derartige Korrekturberechnung mehr ausgeführt wird, sondern lediglich letztmalig früher durchgeführte Korrekturberechnungen nachkorrigiert werden. Der Nachteil des größeren Rechenaufwandes (maximal dreifach) lässt sich durch Parallelisieren egalisieren, dass kein sichtbarer Unterschied in der Rechenzeit selbst entsteht.

Das erfindungsgemäße Verfahren weist zahlreiche Vorteile auf:

- Es ist möglich, im Prozessrechner 1 nicht nur für den Bandkopf zu rechnen, sondern das gesamte Band 5 (also alle Bandpunkte 6) zu betrachten. Dadurch können gesamtheitliche Strategien angewendet werden, etwa die Minimierung des Energieverbrauchs oder die Maximierung des Durchsatzes.
- Es kann Material mit zeitlich variablen Sollwerten T*, G* hergestellt werden, beispielsweise Material mit einem Dickenkeil.
- Anlagengrenzen können genau einbezogen werden. Die Anlagengrenzen der Fertigstraße sind beispielsweise bezüglich der Zwischengerüstkühleinrichtungen 8 der minimale und maximale Kühlmittelstrom sowie die maximale Verstellgeschwindigkeit des Kühlmittelstroms, für die einzelnen Walzgerüste F1...F6 die maximalen Walzkräfte $F_w$ und die maximalen Walzmomente M, die maximalen Änderungsgeschwindigkeiten für die Walzkraft $F_W$ und das Drehmoment M sowie weiterhin minimale und maximale Werte für den Massenfluss und ein maximaler Wert für die Änderung des Massenflusses.
- Der Ansatz schafft die Voraussetzungen, im Voraus das Erreichen irgendeines beliebigen Grenzwertes der Fertigstraße vorherzusagen, etwa die Drehmomentgrenze eines Walzgerüstantriebes.
- Der Ansatz stellt eine korrekte Beschreibung aller dynamischen Vorgänge dar und erlaubt so die Beherrschung von Lastumverteilungen. Das ist Voraussetzung beispielsweise für eine modellprädiktive Dickenregelung.
- Da der Ansatz auch dynamische Vorgänge korrekt beschreibt, wird die Adaption verbessert, die im Stand der Technik einen stationären eingeschwungenen Zustand unterstellt, der in der Praxis gerade am Bandkopf oftmals nicht gegeben ist.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

**Patentansprüche**

1. Ermittlungsverfahren für Temperatur und Geometrie eines eine Fertigstraße mit mehreren Walzgerüsten (F1...F6) durchlaufenden Metall-Warmbandes (5),

   - wobei spätestens beim Einlaufen von Bandpunkten (6) des Warmbandes (5) in die Fertigstraße für den jeweils einlaufenden Bandpunkt (6) eine Anfangstemperatur (T1) und eine Anfangsgeometrie (G1) erfasst werden,
   - wobei die Anfangstemperatur (T1) und die Anfangsgeometrie (G1) des jeweiligen Bandpunktes (6) dem jeweiligen Bandpunkt (6) als Isttemperatur (T2) und als Istgeometrie (G2) zugeordnet werden,
   - wobei die Bandpunkte (6) beim Durchlaufen der Fertigstraße wegverfolgt werden,
   - wobei das Warmband (5) in der Fertigstraße Temperaturbeeinflussungen ($\delta T$) und Geometriebeeinflussungen ($\delta G$) unterworfen wird,
   - wobei mittels eines Modells (9) anhand der Isttemperatur (T2), der Istgeometrie (G2), der Temperaturbeeinflussungen ($\delta T$) und der Geometriebeeinflussungen ($\delta G$) unter Berücksichtigung der Wegverfolgung in Echtzeit neue Isttemperaturen (T2) und neue Istgeometrien (G2) der erfassten Bandpunkte (6) ermittelt und den erfassten Bandpunkten (6) zugeordnet werden, so dass die Isttemperaturen (T2) und die Istgeometrien (G2) der in die Fertigstraße eingelaufenen Bandpunkte (6) während des Durchlaufs der Bandpunkte (6) durch die Fertigstraße jederzeit zur Verfügung stehen, **dadurch gekennzeichnet,**
   - **dass** nach dem Auslaufen der Bandpunkte (6) aus der Fertigstraße deren Endgeometrien (G3) erfasst werden,
   - **dass** unter Verwendung der jeweils erfassten Endgeometrie (G3) und der Istgeometrie (G2) Korrekturfaktoren ($s_k$) für die Modellierung der Walzgerüste (F1...F6) durch das Modell (9) ermittelt werden und
   - **dass** mittels des Modells (9) zusätzlich zu den Istgeometrien (G2) funktionale Abhängigkeiten der Istgeometrien (G2) von den Korrekturfaktoren ($s_k$) ermittelt werden, so dass die Istgeometrien (G2) der bereits in die Fertigstraße eingelaufenen Bandpunkte (6) während ihres Durchlaufs durch die Fertigstraße anhand der Korrekturfaktoren ($s_k$) korrigierbar sind.

2. Ermittlungsverfahren nach Anspruch 1,
   **dadurch gekennzeichnet,**
   **dass** im Rahmen des Modells (9) der Fertigstraße auch erwartete gepufferte Bandlängen oder deren Änderungen ermittelt werden und dass die Korrekturfaktoren ($s_k$) für die Modellierung der Walzgerüste (F1...F6) der Fertigstraße durch das Modell (9) unter Verwendung auch der gepufferten Bandlängen oder deren Änderungen ermittelt werden.

3. Ermittlungsverfahren nach Anspruch 2,
   **dadurch gekennzeichnet,**
   **dass** im Rahmen des Modells (9) der Fertigstraße erwartete Vor- und Nacheilungen (k, k') ermittelt werden und dass die gepufferten Bandlängen anhand von Walzenumfangsgeschwindigkeiten (v) und der erwarteten Vor- und Nacheilungen (k, k') ermittelt werden.

4. Ermittlungsverfahren nach Anspruch 2 oder 3,
   **dadurch gekennzeichnet,**
   **dass** mindestens ein Korrekturfaktor ($s_k$) für das vom Metall-Warmband (5) als letztes durchlaufene Walzgerüst (F6) anhand der jeweils erfassten Endgeometrie (G3) und der Istgeometrie (G2) ermittelt wird und dass jeweils mindestens ein Korrekturfaktor ($s_k$) für je ein anderes Walzgerüst (F1...F5) unter Berücksichtigung der erwarteten gepufferten Bandlängen oder deren Änderungen ermittelt wird.

5. Ermittlungsverfahren nach einem der obigen Ansprüche,
   **dadurch gekennzeichnet,**

   - **dass** für das vom Metall-Warmband (5) als erstes durchlaufene Walzgerüst (F1) funktionale Abhängigkeiten von einer Anzahl von Korrekturfaktoren ($s_k$) ermittelt werden, die die Modellierung dieses Walzgerüsts (F1) beeinflussen,
   - **dass** für alle anderen Walzgerüste (F2...F6) funktionale Abhängigkeiten von einer Anzahl von Korrekturfaktoren ($s_k$) ermittelt werden, die die Modellierung des jeweiligen anderen Walzgerüsts (F2...F6) beeinflussen, und
   - **dass** für alle anderen Walzgerüste (F2...F6) zusätzlich eine funktionale Abhängigkeit von einem Parameter ($h_e$) ermittelt wird, der von der Gesamtheit der Modellierung der dem betrachteten Walzgerüst (F2...F6) vorgeordneten Walzgerüste (F1...F5) abhängig ist.

6. Ermittlungsverfahren nach Anspruch 5,

**dadurch gekennzeichnet,**

**dass** die funktionalen Abhängigkeiten dadurch bestimmt werden, dass für eine Anzahl von Tupeln der Korrekturfaktoren ($s_k$, $h_e$) jeweils die sich für den jeweiligen Tupel ergebenden erwarteten Größen ermittelt werden, dass die Anzahl von Tupeln eins größer als die Anzahl von Korrekturfaktoren ist ($s_k$, $h_e$) und dass die neuen Istgeometrien (G2) der erfassten Bandpunkte (6) durch Interpolation oder Extrapolation ermittelt werden.

7. Ermittlungsverfahren nach Anspruch 6,
   **dadurch gekennzeichnet,**
   **dass** die Korrekturfaktoren ($s_k$, $h_e$) für das vom Metall-Warmband (5) jeweils durchlaufene Walzgerüst (F1...F6) zum Zeitpunkt der Ermittlung der funktionalen Abhängigkeiten aktuelle Werte ($s_k^0$, $h_e^0$) aufweisen und dass die Tupel derart bestimmt werden, dass sie ein aktuelles Wertetupel, das sich aufgrund der aktuellen Werte ($s_k^0$, $h_e^0$) ergibt, umgeben.

8. Ermittlungsverfahren nach einem der obigen Ansprüche,
   **dadurch gekennzeichnet,**
   **dass** anhand der ermittelten Korrekturfaktoren ($s_k$) die Nullpunkte ($s_0$) der Walzspalte (s) der Walzgerüste (F1...F6) korrigiert werden.

9. Ermittlungsverfahren nach Anspruch 8,
   **dadurch gekennzeichnet,**
   **dass** zusätzlich die Walzkräfte ($F_w$) erfasst werden und dass nach dem Korrigieren der Nullpunkte ($s_0$) anhand der erfassten Walzkräfte ($F_w$) und erwarteter Walzkräfte (F) mindestens ein weiterer Korrekturfaktor (c) für die Modellierung der von den Walzgerüsten (F1...F6) aufzubringenden Walzkräfte ($F_w$) ermittelt wird.

10. Ermittlungsverfahren nach einem der obigen Ansprüche,
    **dadurch gekennzeichnet,**
    **dass** mittels Schlingenhebern (10) Istgeschwindigkeiten (v') erfasst werden, mit denen das Metall-Warmband (5) den jeweiligen Schlingenheber (10) passiert.

11. Ermittlungsverfahren nach einem der obigen Ansprüche,
    **dadurch gekennzeichnet,**
    **dass** den erfassten Bandpunkten (6) Sollgeometrien (G*) zugeordnet werden, dass mittels des Modells (9) anhand der den erfassten Bandpunkten (6) zugeordneten Sollgeometrien (G*) Ansteuerwerte (A) für die Walzgerüste (F1...F6) ermittelt werden und dass die Ansteuerwerte (A) den Walzgerüsten (F1...F6) zugeführt werden.

12. Ermittlungsverfahren nach Anspruch 11,
    **dadurch gekennzeichnet,**
    **dass** die Sollgeometrien (G*) den Bandpunkten (6) individuell zugeordnet werden.

13. Ermittlungsverfahren nach einem der obigen Ansprüche,
    **dadurch gekennzeichnet,**
    **dass** es getaktet ausgeführt wird.

14. Computerprogramm, das Maschinencode (4) umfasst, der von einem Rechner (1) unmittelbar abarbeitbar ist und dessen Abarbeitung durch den Rechner (1) bewirkt, dass der Rechner (1) ein Ermittlungsverfahren mit allen Schritten eines Ermittlungsverfahrens nach einem der obigen Ansprüche ausführt.

15. Rechner,
    **dadurch gekennzeichnet,**
    **dass** der Rechner derart ausgebildet ist, dass er ein Ermittlungsverfahren mit allen Schritten eines Ermittlungsverfahrens nach einem der Ansprüche 1 bis 13 ausführt.

16. Fertigstraße mit mehreren Walzgerüsten (F1...F6) zum Walzen von Metall-Warmband (5),
    **dadurch gekennzeichnet,**
    **dass** die Fertigstraße mit einem Rechner (1) nach Anspruch 15 ausgestattet ist.

**Claims**

1. Determination method for temperature and geometry of a hot metal strip (5) passing through a finishing train with a plurality of roll stands (F1...F6),

   - wherein at the latest when strip points (6) of the hot strip (5) enter the finishing train a starting temperature (T1) and a starting geometry (G1) are captured for the respectively entering strip point (6),
   - wherein the starting temperature (T1) and the starting geometry (G1) of the respective strip point (6) are assigned to the respective strip point (6) as the actual temperature (T2) and the actual geometry (G2),
   - wherein the strip points (6) are tracked as they pass through the finishing train,
   - wherein the hot strip (5) is subjected to temperature influences ($\delta T$) and geometry influences ($\delta G$) in the finishing train,
   - wherein by means of a model (9) and using the actual temperature (T2), the actual geometry (G2), the temperature influences ($\delta T$) and the geometry influences ($\delta G$), taking into account the tracking, new actual temperatures (T2) and new actual geometries (G2) of the captured strip points (6) are determined in real time and assigned to the captured strip points (6) so that the actual temperatures (T2) and the actual geometries (G2) of the strip points (6) entering the finishing train are available at any time during the passage of the strip points (6) through the finishing train, **characterised in that**

   - after the strip points (6) exit from the finishing train, their final geometries (G3) are captured,
   - using the final geometry (G3) captured in each instance and the actual geometry (G2) correction factors ($s_k$) are determined for the modelling of the roll stands (F1 ... F6) by the model and
   - by means of the model (9) in addition to the actual geometries (G2) functional dependencies of the actual geometries (G2) on the correction factors ($s_k$) are determined, so that the actual geometries (G2) of the strip points (6) that have already entered the finishing train can be corrected based on the correction factors ($s_k$) during their passage through the finishing train.

2. Determination method according to claim 1,
   **characterised in that** expected buffered strip lengths or their changes are also determined in the context of the model (9) of the finishing train and the correction factors ($s_k$) for the modelling of the roll stands (F1...F6) of the finishing train are determined by the model (9) also using the buffered strip lengths or their changes.

3. Determination method according to claim 2,
   **characterised in that** leads and lags (k, k') expected in the context of the model (9) of the finishing train are determined and the buffered strip lengths are determined based on peripheral roll speeds (v) and the expected leads and lags (k, k').

4. Determination method according to claim 2 or 3,
   **characterised in that** at least one correction factor ($s_k$) is determined for the last roll stand (F6) passed through by the hot metal strip (5) based on the final geometry (G3) captured in each instance and the actual geometry (G2) and at least one correction factor ($s_k$) is determined in each instance for another roll stand (F1...F5) respectively taking into account the expected buffered strip lengths or their changes.

5. Determination method according to one of the preceding claims, **characterised in that**

   - for the roll stand (F1) passed through first by the hot metal strip (5) functional dependencies on a number of correction factors ($s_k$) are determined, which influence the modelling of said roll stand (F1),
   - for all the other roll stands (F2...F6) functional dependencies on a number of correction factors ($s_k$) are determined, which influence the modelling of the respective other roll stand (F2...F6), and
   - for all the other roll stands (F2...F6) a functional dependency on a parameter ($h_e$) is also determined, which is a function of the totality of the modelling of the roll stands (F1...F5) preceding the roll stand (F2...F6) in question.

6. Determination method according to claim 5,
   **characterised in that** the functional dependencies are defined in that, for a number of tuples of the correction factors ($s_k$, $h_e$) the expected variables resulting for the respective tuple are determined in each instance, the number of tuples is one greater than the number of correction factors ($s_k$, $h_e$) and the new actual geometries (G2) of the captured strip points (6) are determined by interpolation or extrapolation.

**7.** Determination method according to claim 6,
**characterised in that** the correction factors ($s_k$, $h_e$) for the roll stand (F1...F6) passed through in each instance by the hot metal strip (5) have current values ($s_k^0$, $h_e^0$) at the time of the determination of the functional dependencies and the tuples are defined in such a manner that they surround a current value tuple, which results from the current values ($s_k^0$, $h_e^0$).

**8.** Determination method according to one of the preceding claims,
**characterised in that** the zero points (so) of the roll gaps (s) of the roll stands (F1...F6) are corrected based on the determined correction factors ($s_k$).

**9.** Determination method according to claim 8,
**characterised in that** the rolling forces ($F_w$) are also captured and after correction of the zero points (so) based on the captured rolling forces ($F_w$) and expected rolling forces (F) at least one further correction factor (c) is determined for the modelling of the rolling forces ($F_w$) to be applied by the roll stands (F1...F6).

**10.** Determination method according to one of the preceding claims,
**characterised in that** loopers (10) are used to capture actual speeds (v') at which the hot metal strip (5) passes the respective looper (10).

**11.** Determination method according to one of the preceding claims,
**characterised in that** setpoint geometries (G*) are assigned to the captured strip points (6), activation values (A) for the roll stands (F1...F6) are determined by means of the model (9) based on the setpoint geometries (G*) assigned to the captured strip points (6) and the activation values (A) are supplied to the roll stands (F1...F6).

**12.** Determination method according to claim 11,
**characterised in that** the setpoint geometries (G*) are assigned individually to the strip points (6).

**13.** Determination method according to one of the preceding claims,
**characterised in that** it is executed in a clocked manner.

**14.** Computer program, which comprises machine code (4), which can be processed directly by a computer (1) and the processing of which by the computer (1) causes the computer (1) to execute a determination method with all the steps of a determination method according to one of the preceding claims.

**15.** Computer,
**characterised in that** the computer is configured in such a manner that it executes a determination method with all the steps of a determination method according to one of claims 1 to 13.

**16.** Finishing train with a plurality of roll stands (F1...F6) for rolling hot metal strip (5),
**characterised in that** the finishing train is equipped with a computer (1) according to claim 15.


**Revendications**

**1.** Procédé de détermination de la température et de la géométrie d'un feuillard ( 5 ) métallique laminé à chaud passant dans un train finisseur ayant plusieurs cages (F1 ... F6 ) de laminoir,

- dans lequel on détecte une température ( T1 ) initiale et une géométrie ( G1 ) initiale au plus tard à l'entrée de points ( 6 ) du feuillard ( 5 ) laminé à chaud dans le train finisseur pour le point ( 6 ) du feuillard entrant respectivement,
- dans lequel on affecte, comme température ( T2 ) réelle et comme géométrie ( G2 ) réelle, la température ( T1 ) initiale et la géométrie ( G1 ) initiale du point ( 6 ) respectif du feuillard au point ( 6 ) respectif du feuillard,
- dans lequel on suit les points ( 6 ) du feuillard dans la traversée du train finisseur,
- dans lequel on soumet le feuillard ( 5 ) laminé à chaud dans le train finisseur à des influences ( $\delta T$ ) de température et à des influences ( $\delta G$ ) de géométrie,
- dans lequel on détermine, au moyen d'un modèle ( 9 ), à l'aide de la température ( T2 ) réelle, de la géométrie ( G2 ) réelle, des influences ( $\delta T$ ) de température et des influences ( $\delta G$ ) de géométrie, en tenant compte du suivi en temps réel, de nouvelles températures ( T2 ) réelles et de nouvelles géométries ( G2 ) réelles des points ( 6 ) du feuillard détectés et on les affecte aux points ( 6 ) du feuillard détectés, de manière à disposer à tout instant des températures ( T2 ) réelles et des géométries ( G2 ) réelles des points ( 6 ) du feuillard entrés dans le train finisseur pendant que les points ( 6 ) du feuillard passent dans le train finisseur, **caractérisé en ce que**
- on détecte, après la sortie des points ( 6 ) du feuillard du train finisseur, leurs géométries ( G3 ) finales,
- **en ce que**, en utilisant la géométrie ( G3 ) finale détectée respectivement et la géométrie ( G2 ) réelle, on détermine, par le modèle ( 9 ), des facteurs ( $s_k$ ) de correction pour la modélisation des cages ( F1 ... F6 ) de laminoir et
- **en ce que** l'on détermine, au moyen du modèle ( 9 ), en plus des géométries ( G2 ) réelles, des dépendances fonctionnelles des géométries ( G2 ) réelles aux facteurs ( $s_k$ ) de correction, de manière à pouvoir corriger, au moyen des facteurs ( $s_k$ ) de correction, les géométries ( G2 ) réelles des points ( 6 ) du feuillard ayant déjà pénétré dans le train finisseur, pendant leur passage dans le train finisseur.

2.  Procédé de détermination suivant la revendication 1,
    **caractérisé**

    **en ce que** l'on détermine, dans le cadre du modèle ( 9 ) du train finisseur, également des longueurs de feuillard mises en réserve, escomptées ou leurs variations et en ce que l'on détermine les facteurs ( $s_k$ ) de correction pour la modélisation des cages ( F1 ... F6 ) de laminoir du train finisseur par le modèle ( 9 ) en utilisant également les longueurs de feuillard mises en réserve ou leurs variations.

3.  Procédé de détermination suivant la revendication 2,
    **caractérisé**

    **en ce que** l'on détermine, dans le cadre du modèle ( 9 ) du train finisseur, des avances et des retards ( k, k' ) escomptés et en ce que l'on détermine les longueurs de feuillard mises en réserve au moyen de la vitesse ( v ) périphérique de laminage et des avances et des retards ( k, k' ) escomptés.

4.  Procédé de détermination suivant la revendication 2 ou 3,
    **caractérisé**

    **en ce que** l'on détermine au moins un facteur ( $s_k$ ) de correction pour la cage ( F6 ) de laminoir parcourue en dernier par le feuillard ( 5 ) métallique laminé à chaud, au moyen de la géométrie ( G3 ) finale détectée respectivement et de la géométrie ( G2 ) réelle et en ce que l'on détermine respectivement au moins un facteur ( $s_k$ ) de correction pour respectivement une autre cage ( F1 ... F5 ) de laminoir, en tenant compte des longueurs de feuillard mises en réserve, escomptées ou de leurs variations.

5.  Procédé de détermination suivant l'une des revendications précédentes,
    **caractérisé**

    - **en ce que** l'on détermine, pour la cage ( F1 ) de laminoir parcourue en premier par le feuillard ( 5 ) métallique laminé à chaud, des dépendances fonctionnelles d'un certain nombre de facteurs ( $s_k$ ) de correction, qui influencent la modélisation de cette cage ( F1 ) de laminoir,
    - **en ce que**, pour toutes les autres cages ( F2 ... F6 ) de laminoir, on détermine des dépendances fonctionnelles d'un certain nombre de facteurs ( $s_k$ ) de correction, qui influencent la modélisation de l'autre cage ( F2 ... F6 ) de laminoir respective et
    - **en ce que**, pour toutes les autres cages ( F2 ... F6 ) de laminoir, on détermine en outre une dépendance fonctionnelle d'un paramètre ( $h_e$ ), qui dépend de l'ensemble de la modélisation des cages ( F1 ... F5 ) en amont de la cage ( F2 ... F6 ) de laminoir considérée.

6.  Procédé de détermination suivant la revendication 5,
    **caractérisé**

    **en ce que** l'on définit les dépendances fonctionnelles, en déterminant, pour un nombre de multiplets des facteurs ( $s_k$, $h_e$ ) de correction, respectivement les grandeurs escomptées résultant du multiplet respectif, en ce que le nombre de multiplets est plus grand de un que le nombre des facteurs ( $s_k$, $h_e$ ) de correction et en ce que l'on détermine par interpolation ou par extrapolation les nouvelles géométries ( G2 ) réelles des points ( 6 ) du feuillard détectés.

7.  Procédé de détermination suivant la revendication 6,
    **caractérisé**

    **en ce que** les facteurs ( $s_k$, $h_e$ ) de correction, pour la cage ( F1 ... F6 ) de laminoir parcourue respectivement par le feuillard ( 5 ) métallique laminé à chaud, ont, à l'instant de la détermination des dépendances fonctionnelles, des

valeurs ( $s_k{}^0$, $h_e{}^0$ ) présentes et en ce que l'on définit les multiplets, de manière à ce qu'ils entourent un multiplet de valeurs présent, qui est donné sur la base des valeurs ( $s_k{}^0$, $h_e{}^0$ ) présentes.

8. Procédé de détermination suivant l'une des revendications précédentes,
   **caractérisé**
   **en ce qu'**au moyen des facteurs ( $s_k$ ) de correction déterminés, on corrige les points ( $s_0$ ) zéro des emprises ( s ) des cages ( F1 ... F6 ) de laminoir.

9. Procédé de détermination suivant la revendication 8,
   **caractérisé**
   **en ce que** l'on détecte en outre les forces ( $F_w$ ) de laminage et en ce qu'après la correction des points ( $s_0$ ) zéro, on détermine, au moyen des forces ( $F_w$ ) de laminage détectées et des forces ( F ) de laminage escomptées, au moins un autre facteur ( c ) de correction pour la modélisation des forces ( $F_w$ ) de laminage à appliquer par les cages ( F1 ... F6 ) de laminoir.

10. Procédé de détermination suivant l'une des revendications précédentes,
    **caractérisé**
    **en ce que** l'on détecte, au moyen de releveur ( 10 ) de boucles, des vitesses ( v' ) réelles, auxquelles le feuillard ( 5 ) métallique laminé à chaud passe dans le releveur ( 10 ) de boucles respectif.

11. Procédé de détermination suivant l'une des revendications précédentes,
    **caractérisé**
    **en ce que** l'on affecte des géométries ( G* ) de consigne aux points ( 6 ) du feuillard détectés, en ce que, au moyen du modèle ( 9 ), on détermine, à l'aide des géométries ( G* ) de consigne affectées aux points ( 6 ) du feuillard détectés, des valeurs ( A ) de commande des cages ( F1 ... F6 ) de laminoir et en ce que l'on envoie les valeurs ( A ) de commande aux cages ( F1 ... F6 ) de laminoir.

12. Procédé de détermination suivant la revendication 11,
    **caractérisé**
    **en ce que** l'on affecte individuellement les géométries ( G* ) de consigne aux points ( 6 ) du feuillard.

13. Procédé de détermination suivant l'une des revendications précédentes,
    qui est exécuté en cadence.

14. Programme d'ordinateur, qui comprend un code ( 4 ) de machine, qui peut être exécuté directement par un ordinateur ( 1 ) et dont l'exécution par l'ordinateur ( 1 ) fait que l'ordinateur ( 1 ) réalise un procédé de détermination ayant tous les stades d'un procédé de détermination suivant l'une des revendications précédentes.

15. Ordinateur,
    **caractérisé**
    **en ce que** l'ordinateur est constitué de manière à exécuter un procédé de détermination ayant tous les stades d'un procédé de détermination suivant l'une des revendications 1 à 13.

16. Train finisseur ayant plusieurs cages ( F1 ... F6 ) de laminoir pour laminer un feuillard ( 5 ) métallique à laminer à chaud,
    **caractérisé en ce que**
    le train finisseur est équipé d'un ordinateur ( 1 ) suivant la revendication 15.

FIG 1

FIG 2

$$a = T \quad \text{mit} \quad T = 100 \dots 500 \text{ ms}$$
$$\text{oder} \quad a = l \quad \text{mit} \quad l = 20 \dots 100 \text{ cm}$$
$$\text{oder} \quad a = m \quad \text{mit} \quad m = 10 \dots 50 \text{ kg}$$

EP 2 603 333 B1

# FIG 3

nimm Anfangstemperatur und Anfangsgeometrie des jeweiligen Bandpunktes entgegen — S1

ordne die Anfangstemperatur und die Anfangsgeometrie dem entsprechenden Bandpunkt als Istwerte zu — S2

füge den entsprechenden Bandpunkt sowie die ihm zugeordneten Istwerte der Gesamtheit an verwalteten Bandpunkten hinzu — S3

führe bezüglich aller verwalteten Bandpunkte eine Wegverfolgung durch — S4

aktualisiere mittels eines Modells der Fertigstraße anhand der vorherigen Isttemperatur, der vorherigen Istgeometrie, der Temperatur-beeinflussung und der Geometriebeeinflussung unter Berücksichtigung der Wegverfolgung die Isttemperaturen und die Istgeometrien — S5

ermittle mittes des Modells zusätzlich zu den erwarteten Istgeometrien und Isttemperaturen funktionale Abhängigkeiten der Istgeometrien und Isttemperaturen von Korrekturfaktoren — S6

S7 Auslauf Bandpunkt? −

+

nimm die Endtemperatur und Endgeometrie des gerade auslaufenden Bandpunktes entgegen — S8

ermittle neue Werte für die Korrekturfaktoren — S9

lösche den ausgelaufenen Bandpunkt aus der Gesamtheit an verwalteten Bandpunkten — S12

S11 adaptiere das Modell — S10

führe die Isttemperaturen und Istgeometrien der bereits in der Fertigstraße befindlichen Bandpunkte nach

S13 Einlauf Bandpunkt? −

+

FIG 4

8

F3   10   d3  5   F4

d2   δG, δT   A   d4

A   δT

δG, δT

A   v'   A

1

FIG 5

selektiere einen der verwalteten Bandpunkte — S21

ermittle den momentanen Ort des selektierten Bandpunktes — S22

S23 — Ort Walzgerüst?

S24 — ermittle eine neue Isttemperatur und eine neue Istgeometrie

S25 — ordne die neu ermittelten Werte dem entsprechenden Bandpunkt zu

S26 — ermittle funktionale Abhängigkeiten von Korrekturfaktoren, die speziell auf diesen Walzvorgang bezogen sind

S27 — Ort Kühleinrichtung?

S28 — ermittle eine neue Isttemperatur

S29 — ordne die neu ermittelte Isttemperatur dem entsprechenden Bandpunkt zu

S30 — ermittle eine funktionale Abhängigkeit der Isttemperatur von einem entsprechenden Korrekturfaktor

S31 — ermittle eine neue Isttemperatur

S32 — ordne die neu ermittelte Isttemperatur dem entsprechenden Bandpunkt zu

S33 — alle?

EP 2 603 333 B1

# FIG 6

$T' = T'(T2)$

$x = (h_e, h_a, v_a, F_e, F_a, T', r, w, c)$

$F_W = F_W(x)$

$v = v(x)$

$k = v_a / v$

$k' = v_e / v$

$M = M(x)$

$h_a = s + g(F_W + F_B) + b(F_W, F_B) - c_{tw} - s_0 - s_k$

## FIG 7

erfasse zumindest Messwerte für das Drehmoment, die Walzenumfangsgeschwindigkeit, die Anstellung und die Walzkraft des ersten Walzgerüsts sowie die ein- und auslaufseitigen Züge — S41

ermittle die neue Isttemperatur des betrachteten Bandpunkts sowie - falls erforderlich - die funktionale Abhängigkeit der Isttemperatur von einem Korrekturfaktor — S42

ermittle die neue Istgeometrie mit dem Ansatz $s_k = s_k^0 + \Delta s_k$ — S43

ermittle die neue Istgeometrie mit dem Ansatz $s_k = s_k^0 - \Delta s_k$ — S44

## FIG 8

erfasse zumindest Messwerte für das Drehmoment, die Walzenumfangsgeschwindigkeit, die Anstellung und die Walzkraft des betrachteten Walzgerüsts sowie die ein- und auslaufseitigen Züge — S51

ermittle die neue Isttemperatur des betrachteten Bandpunkts sowie - falls erforderlich - die funktionale Abhängigkeit der Isttemperatur von einem Korrekturfaktor — S52

ermittle die neue Istgeometrie mit dem Ansatz $s_k = s_k^0 + \Delta s_k$ und $h_e = h_e^0$ — S53

ermittle die neue Istgeometrie mit dem Ansatz $s_k = s_k^0 - \Delta s_k/2$ und $h_e = h_e^0 + \Delta h_e$ — S54

ermittle die neue Istgeometrie mit dem Ansatz $s_k = s_k^0 - \Delta s_k/2$ und $h_e = h_e^0 - \Delta h_e$ — S55

## FIG 9

## FIG 10

erfasse Endtemperatur und Endgeometrie eines Bandpunktes — S61

ermittle anhand der Isttemperatur des Bandpunktes und der gemessenen Endtemperatur für ein Temperaturmodell der Fertigstraße mindestens einen Korrekturfaktor — S62

ermittle anhand der Endgeometrie und der Istgeometrie einen Korrekturfaktor für die Modellierung des letzten Walzgerüsts der Fertigstraße — S63

führe die Modellierung der übrigen Walzgerüste der Fertigstraße nach — S64

# FIG 11

erfasse Endtemperatur und Endgeometrie eines Bandpunktes — S61

ermittle anhand der Isttemperatur des Bandpunktes und der gemessenen Endtemperatur für ein Temperaturmodell der Fertigstraße mindestens einen Korrekturfaktor — S62

ermittle anhand der Endgeometrie und der Istgeometrie einen Korrekturfaktor für die Modellierung des letzten Walzgerüsts der Fertigstraße — S63

ermittle anhand des Modells erwartete Vor- und Nacheilungen der Walzgerüste — S66

ermittle anhand der Vor- und Nacheilungen in Verbindung mit den Walzenumfangsgeschwindigkeiten der Walzgerüste erwartete gepufferte Bandlängen oder deren Änderungen — S67

erfasse Stellungen der Schlingenheber, ggf. zusätzlich deren Anstellkräfte — S68

ermittle anhand der Stellungen der Schlingenheber tatsächlich gepufferte Bandlängen oder deren Änderungen — S69

führe die Modellierung der übrigen Walzgerüste der Fertigstraße unter Verwendung auch der erwarteten und tatsächlich gepufferte Bandlängen oder deren Änderungen nach — S64

# FIG 12

nimm Endtemperatur und Endgeometrie des auslaufenden Bandpunktes entgegen — S71

adaptiere das Temperaturmodell — S72

ermittle die Nullpunktkorrekturen der Walzgerüste — S73

führe die Istgeometrien und die Isttemperaturen derjenigen Bandpunkte nach, die sich bereits in der Fertigstraße befinden — S74

selektiere diejenigen Bandpunkte, die sich gerade am Ort eines der Walzgerüste befinden — S75

berechne für diese Bandpunkte erwartete Walzkräfte — S76

ermittle anhand der erfassten Walzkräfte und der modellgestützt ermittelten, erwarteten Walzkräfte einen Korrekturfaktor für die Modellierung des Fließverhaltens des Warmbandes — S77

# FIG 13

nimm Anfangstemperatur und Anfangsgeometrie des jeweiligen Bandpunktes entgegen  ~S1

nimm eine Solltemperatur und/oder eine Sollgeometrie entgegen  ~S81

ordne die Anfangstemperatur und Anfangsgeometrie dem entsprechenden Bandpunkt als Istwerte zu  ~S2

setze Ansteuerwerte für die Walzgerüste fest  ~S82

OK=Solltemperatur und Sollgeometrie zumindest in etwa erreicht  ~S83

OK?  S84  —  S85

+  variiere die Ansteuergrößen, um die erwarteten Isttemperaturen und die erwarteten Istgeometrien den entsprechenden Sollgrößen anzunähern

füge den entsprechenden Bandpunkt sowie die ihm zugeordneten Istwerte der Gesamtheit an verwalteten Bandpunkten hinzu  ~S3

führe bezüglich aller verwalteten Bandpunkte eine Wegverfolgung durch  ~S4

steuere die Fertigstraße entsprechend den Ansteuergrößen an  ~S86

aktualisiere mittels eines Modells der Fertigstraße anhand der vorherigen Isttemperatur, der vorherigen Istgeometrie, der Temperatur-beeinflussung und der Geometriebeeinflussung unter Berücksichtigung der Wegverfolgung die Isttemperaturen und die Istgeometrien  ~S5

ermittle mittes des Modells zusätzlich zu den erwarteten Istgeometrien und Isttemperaturen funktionale Abhängigkeiten der Istgeometrien und Isttemperaturen von Korrekturfaktoren  ~S6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10156008 A
- US 7197802 B2

- DE 10156008 A1

**In der Beschreibung aufgeführte Nicht-Patentliteratur**

- Feed forward control system for a hot strip mill. **VON FRANCIS WAGNER et al.** Iron and Steel Engineer. Oktober 1984, 44-48